(19) Europäisches Patentamt
European Patent Office
Office européen des brevets

(11) **EP 2 567 297 B1**

(12) **EUROPÄISCHE PATENTSCHRIFT**

(45) Veröffentlichungstag und Bekanntmachung des Hinweises auf die Patenterteilung:
**20.08.2014 Patentblatt 2014/34**

(21) Anmeldenummer: **11719799.6**

(22) Anmeldetag: **04.05.2011**

(51) Int Cl.:
***G05B 19/418*** (2006.01)

(86) Internationale Anmeldenummer:
**PCT/EP2011/057153**

(87) Internationale Veröffentlichungsnummer:
**WO 2011/138375 (10.11.2011 Gazette 2011/45)**

(54) **VERFAHREN UND SYSTEM ZUR BEREITSTELLUNG VON MONITORING-KENNGROESSEN IN EINEM SOA-BASIERTEN INDUSTRIELLEN UMFELD**

METHOD AND SYSTEM FOR PROVIDING MONITORING CHARACTERISTICS IN AN SOA BASED INDUSTRIAL ENVIRONMENT

PROCÉDÉ ET SYSTÈME DE PRODUCTION DE PARAMÈTRES DE SURVEILLANCE DANS UN ENVIRONNEMENT INDUSTRIEL SE BASANT SUR UNE ARCHITECTURE ORIENTÉE SERVICES (AOS)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2010 DE 102010016764**

(43) Veröffentlichungstag der Anmeldung:
**13.03.2013 Patentblatt 2013/11**

(73) Patentinhaber: **SCHNEIDER ELECTRIC AUTOMATION GMBH
97828 Marktheidenfeld (DE)**

(72) Erfinder:
• **COLOMBO, Armando Walter
63791 Karlstein (DE)**
• **CACHAPA, Daniel
60385 Frankfurt am Main (DE)**

(74) Vertreter: **Stoffregen, Hans-Herbert
Patentanwalt
Friedrich-Ebert-Anlage 11b
63450 Hanau (DE)**

(56) Entgegenhaltungen:
**EP-A1- 2 172 879     WO-A2-2008/135459**

• **D. CACHAPA: "SoA-based Production Monitoring Systems for Energy Efficiency: A Case-study Using Ford's POSMon System", ICIT CONFERENCE, 14. März 2010 (2010-03-14), XP002640790, in der Anmeldung erwähnt**

**Beschreibung**

Die Erfindung bezieht sich auf ein Verfahren zur Bereitstellung von Monitoring-Kenngrößen in einem SoA-basierten industriellen Umfeld zur Überwachung von Zustandsänderungen eines Prozesses und/oder von Produktionsmitteln einer industriellen Anlage, wobei die Zustandsänderungen durch Auswertung von Merkmal-basierten Monitoring-Kenngrößen wie Sensor-Signalen erhalten werden, die von zu überwachenden Komponenten als Monitoring-Komponenten wie Sensoren der industriellen Anlage als Service (S1...Sn) bereitgestellt werden sowie auf ein System zur Durchführung des Verfahrens nach dem Oberbegriff des Anspruchs 13.

Ein Verfahren und ein System zur Bereitstellung von Monitoring-Kenngrößen in einem SoA-basierten industriellen Umfeld ist beispielsweise in der Druckschrift D. Cachapa u.a.: "SoA-based Production Monitoring Systems for Energy Efficiency: A Case-study Using Ford's POSMon System", ICIT Conference 14. - 17. März 2010. In der Druckschrift Cachapa ist ausgehend von einem bekannten Produktionsüberwachungssystem die Verwendung einer SoA-basierten Technologie zur Verbesserung der Überwachung einer industriellen Anlage beschrieben.

Ein in der Druckschrift "D. Cachapa" beschriebenes Netzwerk-Layout umfasst ein firmeneigenes Netzwerk zur Verbindung von Steuereinrichtungen wir PLC's, die jeweils Komponenten des Produktionssystems steuern und überwachen.

Ferner umfasst das Netzwerk ein Anlagen-Netzwerk, basierend beispielsweise auf TCP/IP, welches sämtliche produktionsunterstützende Systeme wie beispielsweise Produktionsdatenbanken, Alarmerkennungssysteme, Produktions-Overhead-Anzeigen mit Überwachungseinheiten verbindet, in denen eine Datenanalyse durch Produktionsingenieure vorgenommen werden kann. Die zwei Netzwerke sind über einen Daten-Erfassungs-Server verbunden, der eine Brücke zwischen beiden Netzwerken bildet. Zur Verbesserung des bekannten Systems, insbesondere mit dem Ziel zur Bereitstellung von Monitoring-Kenngrößen, wird eine SoA-basierte Architektur vorgeschlagen, wobei sogenannte "Smartdevices" als Service-orientierte Komponenten ausgebildet sind, welche in der Lage sind, beispielsweise Monitoring-Kenngrößen über ein Service-Interface als Service bereitzustellen.

In dem Aufsatz J. King u.a.: "Atlas: Service-oriented sensor platform" aus dem Jahr 2006 sowie in der WO 2007/098168 A1 ist eine modulare Plattform beschrieben, die eine automatische Integration von heterogenen Geräten, Sensoren und Aktoren in ein heterogenes Netzwerk ermöglicht. Das System umfasst eine Hardware-Plattform, zumindert einen Treiber, eine Vielzahl von mit der Hardware-Plattform verbundene Geräte, ein Middleware-Interface und eine Vielzahl von Software-Services. Jede der Vielzahl von Geräten ist aus einer Gruppe von Sensoren und Aktoren ausgewählt. Die Vielzahl der Software-Services wird von zumindest einem Treiber generiert, wobei ein Software-Service mit einem Gerät assoziiert ist und wobei jede der Software-Services mit dem Middleware-Interface kommuniziert. Auch ist ein Service-Composer vorgeschlagen, der Services von den Sensoren zusammenstellt, die sich allerdings in einer Ebene der Hardware-Plattform, nämlich dem "Physical-Layer" befinden.

Allgemeine Hinweise über die Service-orientierte Architektur von Geräten sowie die Kommunikation zwischen Service-orientierten Geräten und die Verwendung von DPWS (Device Profile for Web Services) sind nachfolgenden Aufsätzen zu entnehmen: F. Jammes and H. Smit, "Service-oriented architectures for devices - the SIRENA view," 3rd IEEE International Conference on Industrial Informatics (INDIN), 2005, pp. 140-147 sowei F. Jammes, A. Mensch, and H. Smit, "Service-oriented device communications using the devices profile for web services,"Proceedings of the 3rd internatinal workshop on Middleware for pervasive and ad-hoc computing, ACM New York, NY, USA, 2005, p. 1-8.

In dem Aufsatz von D. Cachapa, A. Colombo, M. Feike, and A. Bepperling: "An Approach for Integrating Real and Virtual Production Automation Devices Applying the Service-oriented Architecture Paradigm," IEEE Conference on Emerging Technologies & Factory Automation, 2007, pp. 309-314 ist ein Ansatz zur Integration von realen und virtuellen Produktionsautomationsgeräten unter Anwendung der service-orientierten Architektur beschrieben.

Moderne Industrie-Umfelder unterliegen heute Zwängen von allen Seiten: die Regierungen fordern umweltfreundlichere und sicherere Produkte, während die Verbraucher Qualität, kundenspezifische Erzeugnisse und geringe Preise verlangen. Um diesen Herausforderungen in Zeiten des technologischen Aufschwungs zu begegnen, setzen Firmen auf unterschiedlichen Ebenen der Unternehmensarchitektur mehr und mehr intelligente mechatronische Ausrüstungen ein (Geräte und Systeme), um früher durch menschliche Arbeit erledigte Aufgaben zu übernehmen.

Der Bereich der Fertigungsautomatisierung war ein Vorreiter auf diesem Gebiet und hat sich in den letzten Jahren dank immer komplexerer und effizienter arbeitenden Maschinen stark entwickelt. Diese Veränderungen führten jedoch auch zu immer komplexeren Aufgaben bei der Wartung und Überwachung dieser Maschinen. Der Einsatz moderner Fertigungssysteme ist eine unglaublich teure und zeitaufwändige Aufgabe geworden, da Fertigungsvorgaben in Maschinen-Code umgesetzt werden müssen, der alle Geräte untereinander verbindet. In gleicher Weise muss auch ein Rahmen für die Überwachung (bzw. das Monitoring) eingerichtet werden, so dass die Fertigungsingenieure in Echtzeit einen Überblick über den Status der intelligenten mechatronischen Komponenten, über den Produktions- und Informationsfluss, den Energieverbrauch, die Lagerverwaltung und weitere für die Produktion wichtige Kenngrößen erhalten.

Es wird erwartet, dass die ereignis-basierte, hochrangige und abgekoppelte Vorgehensweise der auf einer Services-orientierten Architektur (Service oriented Architecture, SoA) aufbauenden Produktionsmittel eine einfachere Integration, Konfiguration und Wartung der Monitoring-Systeme ermöglicht, bei gleichzeitiger Steigerung der Leistungsfähigkeit und der Möglichkeiten gegenüber herkömmlichen Systemen. Die Untersuchung von Monitoring-Aufgaben und der Energie-Effizienz in einer SoA-basierten Ferkigungsautomatisierung darf sich nicht nur auf die Übernahme des aktuellen Stands der Technik in diesen Bereichen beschränken, sondern muss auch prototypische Engineering-Lösungen erarbeiten, die die vorgeschlagene Methodologie demonstrieren. Diese Lösungen sollten ingenieurmäßig auf existierenden Anwendungsfällen aufbauen, die die aktuellen industriellen Bedürfnisse darstellen.

Um das Problem anzugehen, wie man die verfügbaren neuen Technologien am besten in modernen Produktionsanlagen einsetzt, muss man zuerst die Anforderungen an ein Energie-orientiertes Produktions-Monitoring verstehen. In dem Dokument CACHAPA ist eine Analyse des aktuellen, dem Stand der Technik entsprechenden Monitoring-Systems beschrieben.

In der WO2008/135459 A2 ist ein kollaboratives Automationssystem beschrieben, umfassend verteilte Produktions- und Steuerungsservices bereitstellende Geräte mit zugeordneten Geräte-Agenten, Produkte mit zugeordneten Produkt-Agenten sowie eine eine Kommunikationsplattform bereitstellende Koordinationseinheit. Um eine dynamische Ermittlung und einen Aufruf von Prozessen in einer lose gekoppelten Produktions- und Infrastruktur zu erreichen, ist vorgesehen, dass den Produktions- und Steuerungsservices bereitstellenden Geräten ein DPWS-basierter Web-Service zugeordnet ist, wobei Gerätefunktionen als Geräte-Services und Agenten-Funktionen beschreibende Geräte-Agenten als Agenten-Services in den DPWS-basierten Web-Service implementiert sind und wobei die Kommunikationsplattform als einheitliche DPWS-orientierte SOA-Plattform ausgebildet ist.

In der EP 2 172 879 A1 ist ein Verfahren zur regelbasierten Überwachung einer Komponente beschrieben, die einer service-orientierten Architektur hinzugefügt wurde. Die service-orientierte Architektur umfasst eine Vielzahl von Komponenten, die durch eine Vielzahl von Überwachungskomponenten überwacht werden. Das Verfahren umfasst folgende Schritte: Auswahl einer Komponente aus der Vielzahl der Komponenten der service-orientierten Architektur, welche ähnlich zu der hinzugefügten Komponente ist, basierend auf einer Ähnlichkeits-Matrix; Auswahl von zumindest einer Regel der Überwachungskomponente der ausgewählten Komponente, wobei die zumindest eine Regel während des Betriebs der service-orientierten Architektur bereits validiert wurde sowie Hinzufügen der zumindest einen Regel der neuen Überwachungskomponente zu der zugefügten Komponente.

Davon ausgehend liegt der vorliegenden Erfindung die Aufgabe zugrunde, eine Anwendung des SoA-Paradigmas in Verbindung mit der Verfügbarkeit von immer billigeren, kleineren und leistungsfähigeren Datenverarbeitungsgeräten zu ermöglichen und insbesondere die aktuellen Energie-orientieren Produktions-Monitoring-Techniken wesentlich zu verbessern.

Die Aufgabe wird erfindungsgemäß dadurch gelöst, dass die von den Monitoring-Komponenten der industriellen Anlage als Services bereitgestellten Merkmal-basierten Monitoring-Kenngrößen mittels in unterschiedlichen Ebenen des SoA-basierten industriellen Umfelds verteilt angeordneten Monitoring-Komponenten und Kontrollsystemen als Soflware-Baustein implementierte Service-Orchestratoren zu neuen, von bestehenden Monitoring-Komponenten nicht zur Verfügung gestellten Modell-basierten Monitoring-Kenngrößen orchestriert werden,
dass die Orchestrierung der Services gemäß einem oder mehreren physikalischen oder logischen Gesetz(en) eines Prozess-Modells der industriellen Anlage erfolgt,
dass jeder der Service-Orchestratoren eine neue Monitor-Komponente in dem SoA-basierten industriellen Umfeld bildet und die zumindest eine neue Modell-basierte Monitoring-Kenngrößen als Service anbietet und
dass die von den Monitoring-Komponenten auf unterschiedlichen Ebenen des SoA-basierten industriellen Umfeldes als Services angebotenen Merkmal- und Modell-basierten Monitoring-Kenngrößen über ein Service-orientiertes Netzwerk zur beliebigen Verknüpfung in einem einen Service-Orchestrator aufweisenden Kontrollsystem bereitgestellt werden.

Das erfindungsgemäße Verfahren und die zugehörige Methodologie basiert auf der Orchestrierung von Diensten für die Darstellung von Merkmal- und Modell-basierten Monitoring-Kenngrößen in einem SoA-basierten industriellen Umfeld.

Vorzugsweise zeichnet sich das Verfahren dadurch aus, dass die Orchestrierung durch die vorzugsweise in einer oder mehreren der Komponenten eingebettete, den Service-Orchestrator bildende Software ausgeführt wird.

Eine weitere bevorzugte Verfahrensweise zeichnet sich dadurch aus, dass für jedes physikalische oder logische Gesetz, das für das Monitoring eines bestimmten Prozesses benutzt wird, ein eigener Orchestrierungs-Prozess durchgeführt wird.

Die Orchestrierung wird vorzugsweise von einem oder mehreren verteilten Orchestratoren ausgeführt, d. h. von Teilen oder der gesamten Software, die in einer Komponente oder in mehreren der Komponenten der SoA-basierten Architektur eingebettet ist bzw. sind.

Die den Sensor-Orchestrator bildende und die Orchestrierung gemäß einem physikalischen oder logischen Gesetz für den zu überwachenden Prozess ausführende Software wird vorzugsweise in die SoA-basierte Komponente hochgeladen.

Eine weitere bevorzugte Vorgehensweise sieht vor, dass das physikalische oder logische Gesetz aus einem Prozess-Modell abgeleitet wird oder auf dem Verfahren der qualitativen Service-Fusion beruht und/oder vorzugsweise das das Prozess-Modell Modell-Parameter und Modell-Eigenschaften umfasst, wobei durch Auswertung der Modell-Eigenschaften die neuen Monitoring-Kenngrößen erzeugt werden, die sodann über die zu den prozessausführenden Komponenten gehörenden Web-Service-Interfaces zur Verfügung gestellt werden.

Des Weiteren zeichnet sich das Verfahren dadurch aus, dass Merkmal-basierte Monitoring-Kenngrößen von intelligenten Sensoren als Services angeboten werden, wobei intelligente Sensoren solche sind, die mit einem Service-Interface ausgerüstet sind, welches Sensor-Daten über das SoA-basierte Netzwerk anbietet und/oder dass Modell-basierte Monitoring-Kenngrößen von den Orchestratoren gemäß einem Orchestrierungs-Verfahren als Service angeboten werden.

System zur Bereitstellung von Monitoring-Kenngrößen in einem SoA-basierten industriellen Umfeld zur Überwachung von Zustandsänderungen eines Prozesses und/oder von Produktionsmitteln einer industriellen Anlage zeichnet sich dadurch aus, dass die Zustandsänderungen durch Auswertung von Merkmal-basierten Monitoring-Kenngrößen wie Sensor-Signalen erhalten werden, die von zu überwachenden Komponenten als Monitoring-Komponenten wie Sensoren der industriellen Anlage als Service bereitgestellt werden und die von den Monitoring-Komponenten der industriellen Anlage als Services bereitgestellten Merkmal-basierten Monitoring-Kenngrößen mittels in unterschiedlichen Ebenen des SoA-basierten industriellen Umfelds verteilt angeordneten Monitoring-Komponenten und Kontrollsystemen als Software-Baustein implementierte Service-Orchestratoren zu neuen, von bestehenden Monitoring-Komponenten nicht zur Verfügung gestellten Modell-basierten Monitoring-Kenngrößen orchestrierbar sind,

dass die Orchestrierung der Services gemäß einem oder mehreren physikalischen oder logischen Gesetz(en) eines Prozess-Modells der industriellen Anlage durchführbar ist,

dass jeder der Service-Orchestratoren eine neue Monitor-Komponente in dem SoA-basierten industriellen Umfeld bildet und die zumindest eine neue Modell-basierte Monitoring-Kenngrößen als Service anbietet und

dass die von den Monitoring-Komponenten auf unterschiedlichen Ebenen des SoA-basierten industriellen Umfeldes als Services angebotenen Merkmal- und Modell-basierten Monitoring-Kenngrößen über ein Service-orientiertes Netzwerk zur beliebigen Verknüpfung in einem einen Service-Orchestrator aufweisenden Kontrollsystem bereitstellbar sind.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:

Fig. 1    eine schematische Darstellung einer Unternehmensarchitektur mit verschiedenen, vernetzten Ebenen unterschiedlicher Reaktionszeiten wie Fertigungsebene und Unternehmensebene.

Fig. 2    eine Unternehmens-System-Architektur mit flacher Hierarchie,

Fig. 3    über ein SoA-basiertes Netzwerk mit einem Service-Orchestrator verbundene Monitoring-Komponenten,

Fig.4    über ein SoA-basiertes Netzwerk miteinander verbundene Monitoring-Komponenten unterschiedlicher Ebenen einer Unternehmensstruktur,

Fig. 5    Aufbau einer Fertigungszelle und

Fig. 6    Orchestrierung von Services gemäß eines Prozess-Modells.

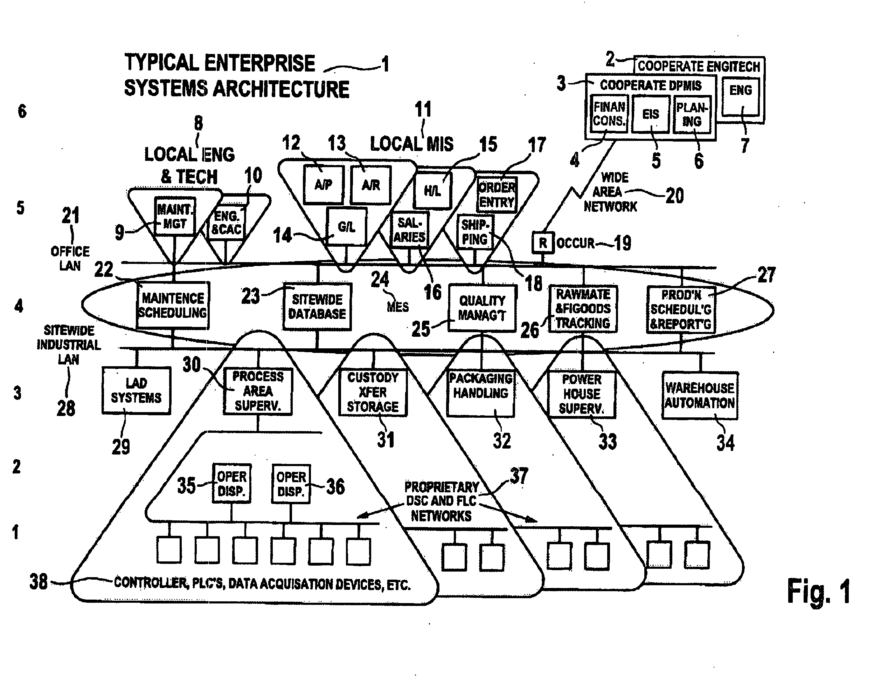

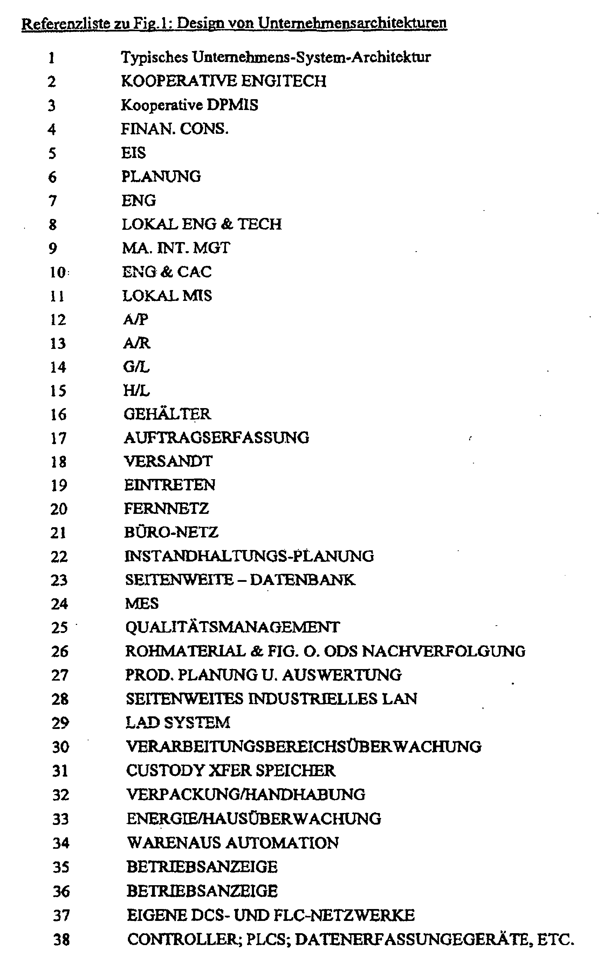

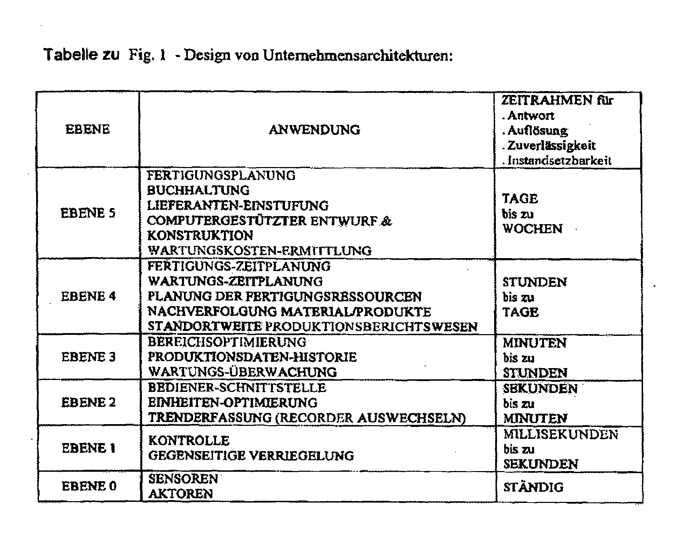

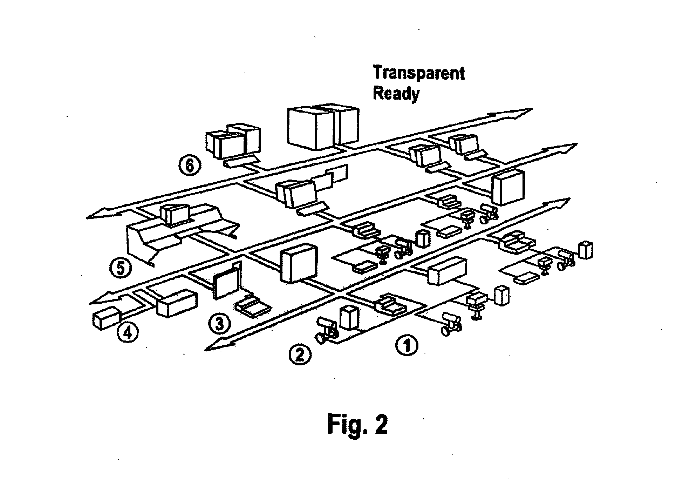

Der Grad der Zuverlässigkeit und der Effizienz des Energieverbrauchs bzw. -Einsatzes im Betrieb von industriellen Anlagen gemäß einer in Fig. 1 dargestellten Struktur hängt nicht nur vom Betrieb einzelner mechatronischer oder Hardware-Komponenten 38 ab, sondern auch von der Struktur und dem Verhalten eines eingebetteten übergeordneten Kontrollsystems 2, 3, 22, 30. Überwachungsaufgaben müssen auf zwei verschiedenen und getrennten, jedoch vernetzten Ebenen 1, 4, 6 d.h. der Fertigungsebene und der höheren Ebene der Unternehmensarchitektur, vorgenommen werden. Auf jeder dieser Ebenen lassen sich eine Anzahl funktionaler und logischer Komponenten 9, 10, 30, 22 identifizieren, die für die Ausführung der folgenden Funktionen zuständig sind: Datenerfassung, Sammeln von Informationen, Signal- und Informationsverarbeitung, Entscheidungsfindung, Diagnose und Einzelüberwachung der Ereignisse. Jede dieser Ebenen, gekennzeichnet, durch die Zahlen 1 bis 6 in Fig. 1, hat ihre eigenen Zeitvorgaben (von Mikrosekunden bis zu Tagen und Wochen) und ihren eigenen Bereich der Daten- und Informationsverarbeitung. Eine umfassende Beschreibung der physischen und logischen Eigenschaften jeder dieser übergeordneten Kontrollebenen in einer Unternehmensarchitektur findet sich in: [PERA 2006, Purdue reference architecture. *http://pera.net, http.//iies.www.ecn.purdue.edu/IIES/PLAI*]. Siehe Fig. 1: PERA Referenz-Architektur und Fig. 2: Beispielhafte Schneider Electric Enterprise Systemarchitektur "Transparenz-bereit".

Das Monitoring der Tätigkeiten, des Verhaltens der mechatronischen bzw. Hardware-Komponenten, sowie des Systems als Ganzem ist daher eine wesentliche Funktion eines derartigen übergeordneten Kontrollsystems an jeder Stelle innerhalb der unterschiedlichen Ebenen der Unternehmensarchitektur.

Als "Monitoring" soll hierbei das Erkennen von charakteristischen Änderungen in einem Prozess oder im Verhalten der mechatronischen bzw. Hardware-Ressourcen verstanden werden, das man durch Auswertung von Prozess- und Komponenten-Signaturen ohne Unterbrechung des Normalbetriebs erreicht (Du, Elbestawi & Wu, 1995). Allgemein gesagt erfordert das Monitoring von industriellen Anlagen grundsätzlich drei aufeinander folgende Phasen: Erstens die Validierung der Hardware-Spezifikationen der Anlage, sowie des zugehörigen Software-Steuerungssystems und der Implementierung dieser beiden Komponenten (Erkennen von Codier-Fehlern). Der zweite Schritt betrifft die "on-line Datenerfassung" und das "Sammeln von Informationen", die durch Auswertung des Echtzeit-Verhaltens und der Echtzeit-Entwicklung der Anlage und des eingebetteten Kontrollsystems erreicht werden. Schließlich müssen Informationen und Sensor-Signale verarbeitet werden, um eine vollständige und zuverlässige Übersicht in Echtzeit über das Verhalten der gesamten industriellen Anlage zu bekommen (Feldmann u. a. 1999 sowie Verweise darin). Die Anwendung dieser Phasen ist nur möglich, wenn Monitoring-Verfahren vorhanden sind, die diese notwendigen Funktionalitäten erfüllen. Im Allgemeinen lassen sich Monitoring-Verfahren in zwei Kategorien unterteilen: Merkmal- und Modell-basierte Verfahren (Du u. a. 1995). Im Falle des Merkmal-basierten Monitoring können das Verhalten der Komponenten und die Prozessbedingungen anhand von Informationen abgeschätzt werden, die von Sensor-/Aktor-Signalen geliefert und von der Prozess-Schnittstelle zur Verfügung gestellt werden (Mechatronik-Informationen). Gibt es ein Modell der industriellen Anlage und des Prozesses, ermöglichen die in diesem/diesen Modell(en) enthaltenen Informationen und die Auswertung von Parametern und Eigenschaften des Modells während des Betriebs der Anlage die Durchführung der Monitoring-Funktionen (Feldmann u.a. 1999 sowie Verweise darin).

Das Monitoring einer industriellen Anlage, wie etwa einer Fertigungszelle, erfordert die kontinuierliche Überwachung des Zustands dieser Zelle über der Zeit. Dies erreicht man durch Überwachung der einschlägigen Kenngrößen jeder der die Anlage bildenden mechatronischen Komponenten und deren Verhältnis zueinander.

Merkmal-basierte Monitoring umfasst die Überwachung der vom Produktionsmittel angebotenen Merkmale. Daten zu diesen Merkmalen werden durch die Auswertung von Signalen erreicht, die von unterschiedlichen Komponenten bzw. Monitoring-Komponenten K1, K2, K3, K4, K5, wie z.B. Sensoren oder elektrischen Maschinen eines Produktionsmittels PM erzeugt werden.

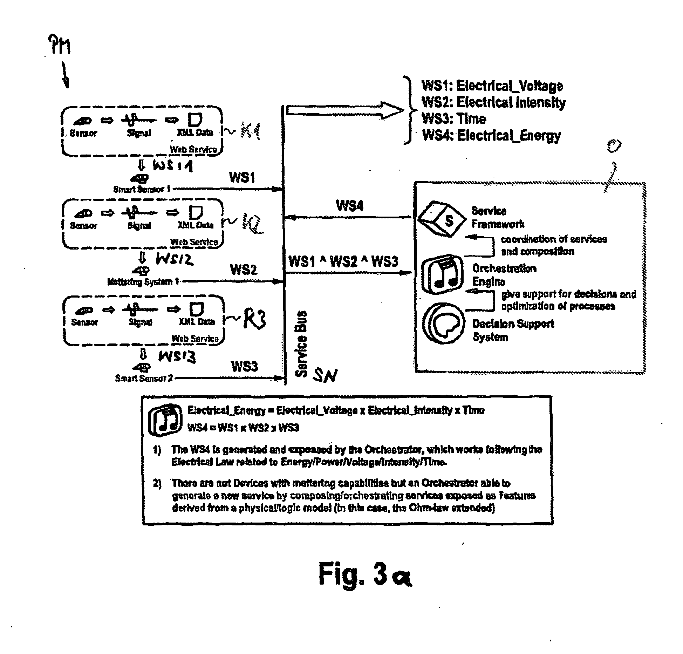

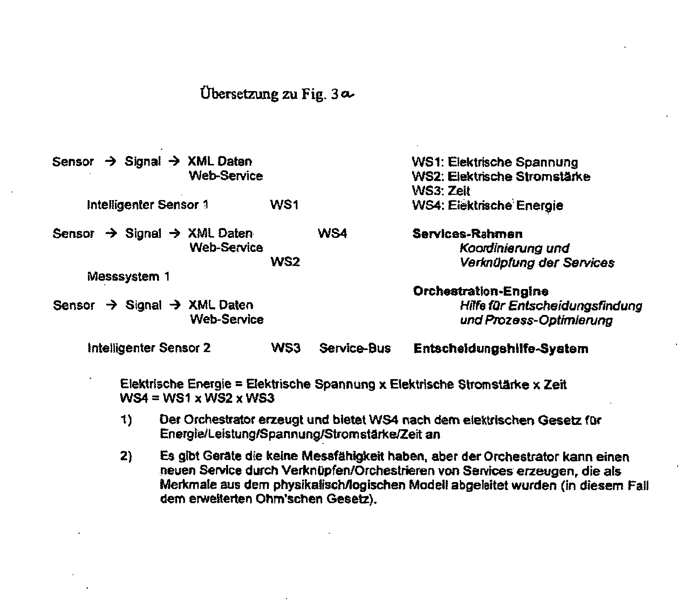

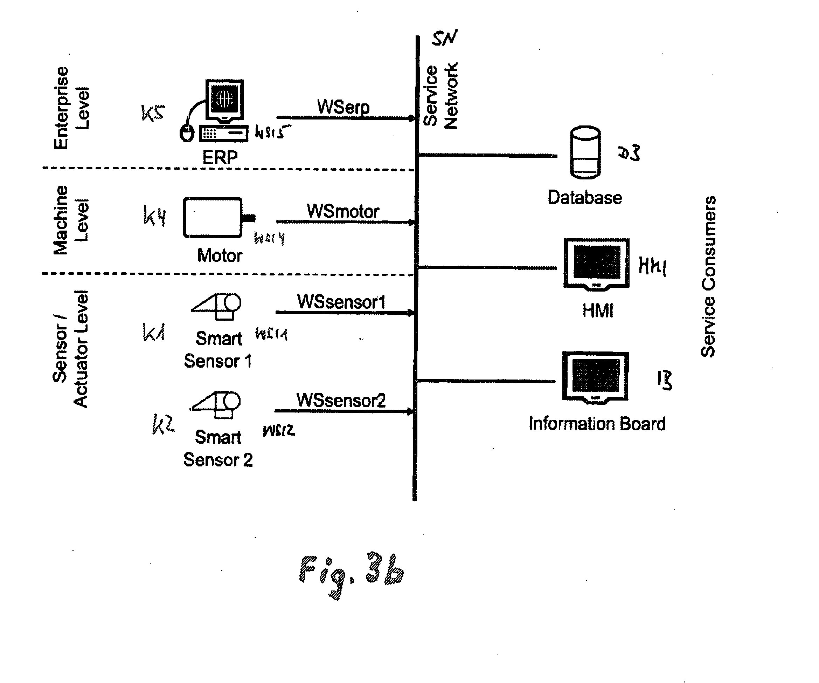

Die vorgeschlagene und in Fig. 3a, 3b dargestellte Architektur zielt darauf ab, die von der Hardware K1, K2, K3 erzeugten Signale zu nehmen, sie in ein XML-Format mit den erweiterten zugehörigen Daten, wie etwa einem Zeitstempel, einzuhüllen und sie dann über ein Web-Dienste-Interface WSI1, WSI2, WSI3 bereit zu stellen. Die Information wird als Ereignis verpackt und wird in Echtzeit über ein Netzwerk SN an alle interessierten Teilnehmer wie Datenbanken DB, Benutzerinterfaces HM1 sowie Kontrollsysteme IB ausgesendet.

Dieses Verfahren wird für jede mechatronische Komponente K1, K2, K3, K4, K5 wiederholt, die in der Lage ist computerisierte Datenverarbeitung zu unterstützen. Sind solche Komponenten mit einer Web-Dienste-Funktion ausgestattet, können sie als SoA-basierte Komponente aufgefasst werden oder als intelligentes Gerät mit integriertem Web-Service WS1, WS2, WS3, WSerp, WSmotor.

Die Ausweitung dieses Verfahrens auf sämtliche Komponenten der Produktionsanlage ergibt dann eine intelligente Anlage mit eingebetteten Web-Services WS1, WS2, WS3, WSerp, WSmotor.

Wenn eines der intelligenten Geräte K1, K2, K3 seine Daten als Web-Service WS1, WS2, WS3 bzw. S1, S2, S3 zur Verfügung stellt, der sich auf Merkmale wie Sensor-Signale, Messdaten usw... bezieht, dann wird dieser Service als Merkmal-Monitoring-Kenngröße, z.B. $S_i$, erkannt.

Nimmt man die Menge Services ($S_l$ ... $S_n$), die in einem Gerät oder einer Fertigungszelle verfügbar sind, können diese zu komplexeren Merkmalen verbunden werden, z.B. zu einer durch Services-Verknüpfung (Service Composition) verknüpften Sensor-Fusion. Das Ergebnis bildet dann eine neue Monitoring-Kenngröße.

$$F_l = S_l \circ S_2 \circ S_3 \circ \ldots \circ S_i \circ \ldots \circ S_n \qquad (1)$$

Der verknüpfte Service $F_l$ ist das Ergebnis der Anwendung einer Relation auf die verfügbare Menge von Services. Diese Relation wird implizite angewandt bei der Verknüpfung der von den einzelnen vorhandenen Sensoren gelieferten Merkmale.

Dazu ist es notwendig, dass ein im Gerät oder in der Fertigungszelle eingebetteter Prozessor die Verknüpfung der einzelnen Merkmale (Services) vornehmen kann, d.h. dass der Prozessor die Services-Orchestrierung gemäß der in (1) vorgegebenen Verknüpfungsregel vornimmt, was genau eine der zentralen Ideen der Erfindung ist:

Eine SoA-basierte Vorgehensweise für das Monitoring.

Dieser Prozessor wird im Folgenden als Orchestrator O bezeichnet.

Jeder Services-Orchestrator O in der SoA-basierten Unternehmensarchitektur ist eine Monitor-Komponente im SoA-basierten übergeordneten Kontrollsystem.

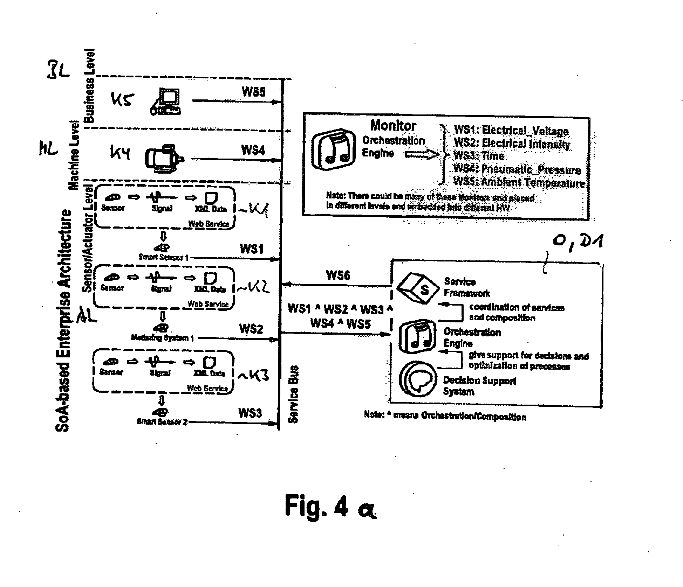

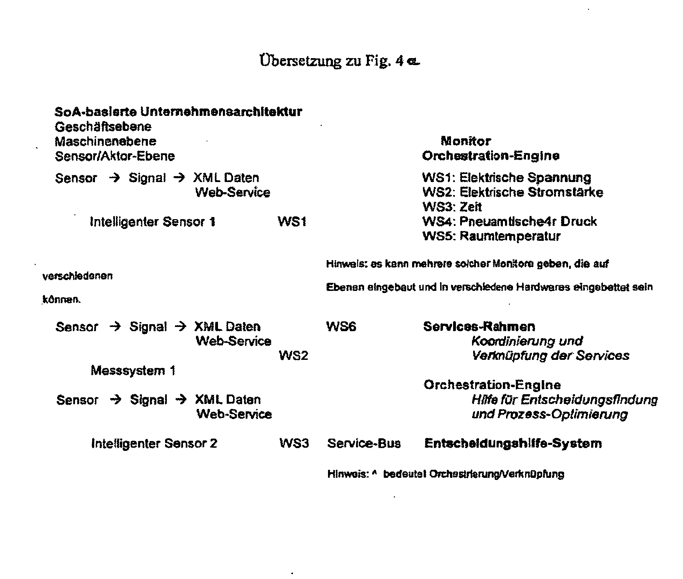

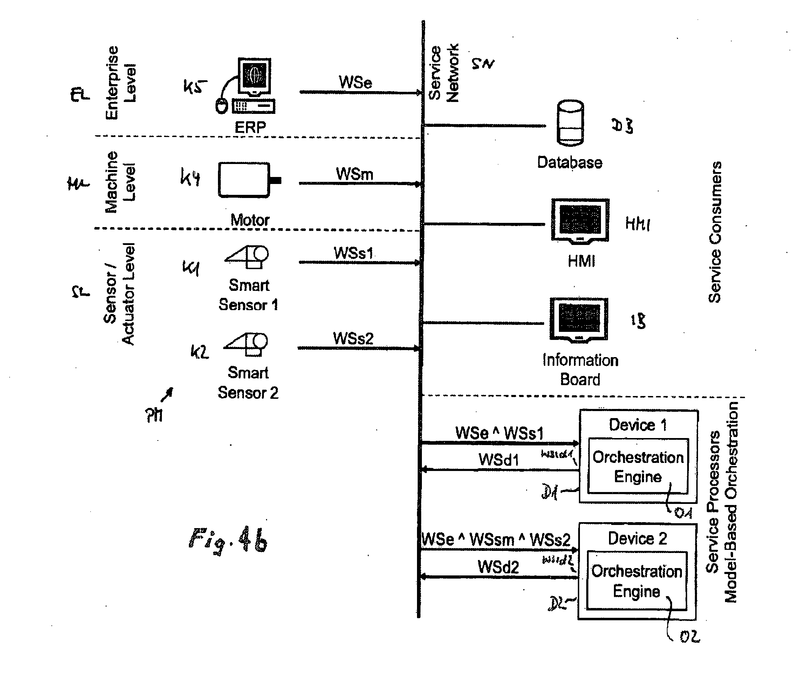

Modell-basiertes Monitoring entfernt sich von den direkt von der Maschine gelieferten Kenngrößen und konzentriert sich auf den eigentlichen Prozess während die Maschine die für den gewünschten Zweck notwendigen Tätigkeiten ausführt und ist rein schematisch in den Fig. 4a, 4b dargestellt.

Das Modell eines Prozesses besteht aus den Modell-Parametern und Modell-Eigenschaften, die den aktuellen Status der Tätigkeit darstellen. Das heißt, dass ein Prozess-Modell die Verbindungen zwischen den verschiedenen für den Prozess erforderlichen Tätigkeiten enthält, zusammen mit der für diese Tätigkeit notwendigen Information, wie z.B. das Besprühen mit Kühlmittel mit einem vorgegebenen Druck während einer vorgegebenen Zeit.

Durch Auswertung der Modell-Eigenschaften werden aus der Modell-Analyse neue Monitoring-Kenngrößen erzeugt, die als Monitoring-Services WS4, WS6, WSd1, WSd2 über die zu den den Prozess ausführenden Komponenten D1, D2 gehörenden Web-Service-Interfaces WSId1, WSId2 zur Verfügung gestellt werden. Ein einfaches Beispiel zeigt die in dieser Methode liegenden Möglichkeiten: in einer Leitung, in der eine Flüssigkeit fließt, übermittelt ein Druckmess-System den Parameter "Druck" (P [Pascal]) und ein zweites Mess-System übermittelt den Parameter "Volumen" (V [m$^3$]). Das Modell der Leitung folgt nun dem Gesetz:

$$Z = \frac{P}{V}$$

Worin Z der Widerstand der Leitung ist. In diesem Fall ermöglicht das Leitungs-Modell die Größe Z als Monitoring-Kenngröße zu ermitteln.

Ein anderes Beispiel: Wenn die für das Monitoring zu überwachende Information die für eine bestimmte Tätigkeit in einem bestimmten Gerät aufgewendete elektrische Energie ist, aber dieses Gerät keinen Sensor enthält, der diese Größe direkt misst, ist es immer noch möglich, diese Information aus der Auswertung der Daten anderer vorhandener Sensoren nach dem entsprechenden physikalischen/logischen Gesetz des betreffenden Prozess-Modells zu gewinnen. Geht man davon aus, dass die Werte für Spannung und Strom verfügbar sind, ist nach den Grundlagen der Elektrotechnik bekannt, dass:

$$E \; [Joules] = P \; [Watt] * t \; [Sekunden] \qquad (2)$$

$$P \; [Watt] = V \; [Volt] * I \; [Ampère] \qquad (3)$$

$$E = V * I * t \qquad (4)$$

Jeder Services-Orchestrator O, O1, O2 in einer SoA-basierten Unternehmensarchitektur ist ein Monitor-System.

Die in eine intelligente Hardware-Komponente K1, K2, K3, K4, K5, D1, D2, d.h. einem Gerät oder System, unabhängig von der Ebene der SoA-basierten Unternehmensarchitektur, eingebettete Software, die für die Verknüpfung der Modell-Parameter gemäß dem physikalischen oder logischen Gesetz zuständig ist, wird als Orchestrator O1, O2 definiert. Die Ergebnisse der Orchestrierung oder Verknüpfung werden als Services WS6, WSd1, WSd2 zur Verfügung gestellt. Der Orchestrator ("Orchestration Engine" in Fig. 3 und Fig. 4) stellt Monitoring-Kenngrößen zur Verfügung und wird aus diesem Grund als SoA-basierte Monitor-Komponente bezeichnet.

Definition 1: Es wird ebenso viele Orchestrierungs-Prozesse wie notwendige Monitoring-Funktionen geben, d.h. dass für jedes physikalische oder logische Gesetz, das für das Monitoring eines bestimmten Prozesses benutzt wird, ein Orchestrierungs-Prozess vorhanden ist.

Definition 2: Die Orchestrierungs-Prozesse werden von einem oder mehreren Orchestrierern ausgeführt, d.h. von Teilen oder der gesamten Software, die in einem oder mehreren Gerät(en) der SoA-basierten Automations-Architektur eingebettet sind/ist.

Definition 3: Entsprechend dem Konzept des Service-Bus wird ein intelligentes Gerät oder System in der SoA-basierten industriellen Anlage die Fähigkeit haben, Monitoring-Funktionen als Services auszuführen, sobald der zugehörige Orchestrierungs-Prozess gemäß dem physikalischen Gesetz für den zu überwachenden Prozess in diesem hochgeladen wird. Dieses physikalische/logische Gesetz beruht auf Prozess-Modellen oder auf Verfahren der qualitativen Sensor-Fusion. Fig. 4a und 4b zeigen das Konzept einer Modell-basierten Orchestrierung, die für Monitoring-Zwecke eingesetzt wird.

Durch Zusammenführen der beiden Verfahrensweisen ist es möglich, von der Fertigungszelle FZ eine sehr viel klarer Sicht zu bekommen, als mit den herkömmlichen Techniken.

Da sowohl die Modell- als auch die Merkmal-basierten Kenngrößen als Web-Services WS1, WS2, WS3, WSm, WSe, WSd1, WSd2 zur Verfügung stehen, wird die Aufgabe, sie zu nützlichen Informationen zu kombinieren, durch weitere Verknüpfung und Orchestrierung dieser Web-Services in verknüpfte Services höherer Ebene erledigt.

Jeder Services-Orchestrator O, O1, 02 in der SoA-basierten Unternehmensarchitektur ist ein Monitor-System.

Die in einer kleinen Hardware-Komponente (Gerät oder System, unabhängig von der Ebene der SoA-basierten Unternehmensarchitektur) eingebettete Software, die für die Verknüpfung der Modell-Parameter gemäß dem physikalischen oder logischen Gesetz zuständig ist, wird als Orchestrator definiert. Die Ergebnisse der Orchestrierung oder Verknüpfung werden als Services zur Verfügung gestellt. Der Orchestrator stellt Monitoring-Kenngrößen zur Verfügung und wird aus diesem Grund als SoA-basierte Monitor-Komponente bezeichnet.

Der Orchestrator O, O1, 02 kann Modell-basiertes Monitoring durchführen, wenn die Verknüpfung der Services (Monitoring-Kenngrößen) einem prozessgemäßen physikalischen oder mathematischen und/oder logischen Gesetz (Modell) folgt. Der Orchestrator O, O1, 02 kann auch Merkmal-basiertes Monitoring durchführen, wenn er nur auf der Grundlage von Ereignissen, die mit Merkmal-basierten Kenngrößen verbunden sind, arbeitet, d.h. z.B. mit als Services dargebotenen Sensor-Signalen. Schließlich kann der Orchestrator O, O1, 02 eine Kombination dieser beiden Monitoring-Verfahren durchführen.

Ausgehend vom vorigen Abschnitt lassen sich einige der Definitionen wie folgt formalisieren:

Definition 4: Monitoring-Kenngrößen in einem SoA-basierten Umfeld werden als Web-Services WS1, WS2, WS3, WS4, WS5, WSd1, WSd2 dargeboten. Die Werte der verschiedenen Kenngrößen werden als Methoden oder Ereignisse über das Web-Services-Interface WSI dargeboten und die notwendige Verknüpfung erfolgt durch Verknüpfung dieser Web-Services WS1, WS2, WS3, WS4, WS5. Deswegen werden diese als äquivalent definiert.

Definition 5: Merkmal-basierte Monitoring-Kenngrößen sind von intelligenten Sensoren dargebotene Web-Services WS1, WS2, WS3. Intelligente Sensoren sind solche, die mit einem Web-Services-Interface WSI ausgerüstet sind, das Sensor-Daten über das SoA-basierte Netzwerk anbieten kann.

Definition 6: Modell-basierte Monitoring-Kenngrößen sind Web-Services WSd1, WSd2, die von Orchestratoren O1, O2 gemäß einem Orchestrierungs-Verfahren dargeboten werden, das es grundsätzlich erlaubt, Monitoring-Funktionen formal zu verknüpfen.

Definition 7: Der Monitor-Orchestrator O1, O2 folgt grundsätzlich einer oder beiden der folgenden zwei Verfahrensweisen:

- Signal-Verknüpfung, z.B. durch Sensor-Fusion, die einen Web-Service ergibt, der einzelne Web-Services miteinander verknüpft
- Prozess-Modell, das einen Web-Service ergibt, der Modell-Parameter oder funktionale Prozesse, wie z.B. pneumatische Kraft, miteinander verknüpft.

Jedes Mal, wenn der Benutzer oder das übergeordnete SoA-basierte Kontrollsystem eine mit dem Prozess, mit dem Komponenten-Verhalten oder dem Verhalten der Architekturebene verbundene spezifische Monitoring-Kenngröße benötigt, bettet der Orchestrierungs-Monitor O1, O2 einen neuen Service ein.

Das Verfahren der Services-Orchestrierung bzw. -Verknüpfung in dem Monitor-Orchestrator O1, O2 folgt einer der drei folgenden Alternativen:

(I) Antwort auf ein mathematisches oder physikalisches oder logisches Modell (z.B. Prozess-Gesetz, physikalisches Gesetz, usw...)
(II) Antwort auf eine Beziehung, die auf Erfahrung oder Kenntnis des zu überwachenden Prozesses beruht (z.B. qualitatives Modell), und
(III) Antwort auf eine Kombination von beidem.

Die Orchestrierungs-Monitore O1, 02 verwandeln die Monitoring-Kenngrößen in "Services". Diese Services WS6, WSd1, WSd2 laufen gemeinsam über den "Service-Bus" SN der SoA-basierten Unternehmensarchitektur. Die Eigenschaft der Monitoring-Services auf dem Service-Bus "gemeinsam" zu sein, ermöglicht es dem übergeordneten Kontrollsystem IB, HMI, Verknüpfungen von Services zu erzeugen, die auf unterschiedlichen Ebenen und von vielen unterschiedlichen Komponenten der SoA-basierten Unternehmensarchitektur angeboten werden.

Auf die Energie bezogene Services, wie z.B. Energieverbrauch, Parameter der Energie-Effizienz, usw... die Energie-Monitoring-Kenngrößen sind und, von intelligenten Geräten nicht als Services angeboten werden, können als Ergebnisse des Verfahrens mit Monitoring-Orchestrierung (gemäß den oben genannten Merkmalen) einfach erzeugt werden. Beispiel: die vom Raum verbrauchte elektrische Energie wird mit der pneumatischen Energie orchestriert, die das Ventil einer in diesem Raum arbeitenden Pumpe verbraucht.

Fig. 4a, 4b zeigt die Verfahrensweise der Monitor-Orchestrierung für eine SoA-basierte Unternehmensarchitektur

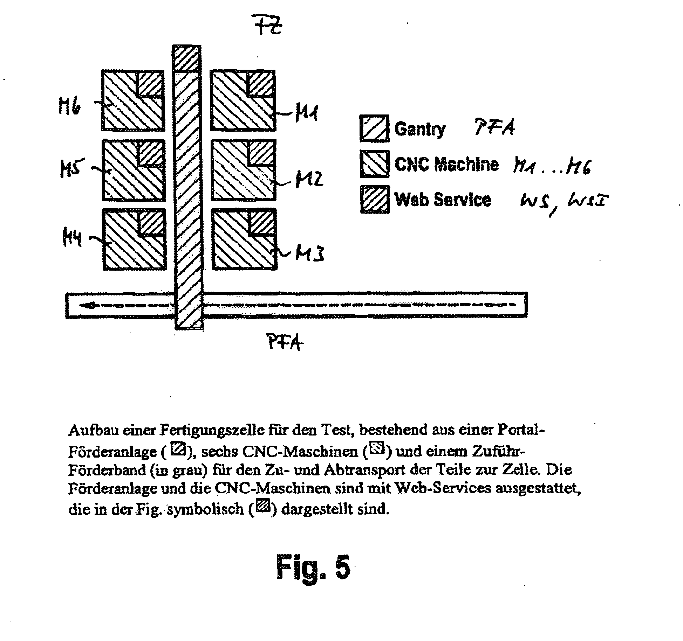

Als Anwendungsfall für die vorgeschlagenen Verfahren wird eine Fertigungszelle FZ gemäß Fig. 5 ausgewählt. Dadurch ist es möglich, Produktions- und Energie-Daten von vorhandenen Maschinen zu bekommen und sie mit dem erwarteten Ergebnis des Einsatzes der erfindungsgemäßen Techniken zu vergleichen.

Für diese Arbeit wurde eine CNC-Fertigungszelle FZ ausgewählt. CNC-Fertigungszellen sind aus mehreren, funktional identischen CNC-Maschinen M1, M2, M3, M4, M5, M6 aufgebaut, die durch eine oder mehrere darüber liegende Portal-Förderanlagen PFA mit Material versorgt werden. Fig. 5 zeigt ein Beispiel einer solchen Anlage. Durch diesen Aufbau können die Maschinen parallel arbeiten, so dass die Arbeit bei Wartungsarbeiten oder Ausfall einer bestimmten Maschine verteilt werden kann und somit Produktionsunterbrechungen vermieden werden.

Der Vorteil der Auswahl eines solchen Aufbaus für die vorliegende Arbeit kann in der Tatsache zusammengefasst werden, dass eine solche Zelle zwar aus vielen Maschinen aufgebaut sein kann, die aber funktional identisch sind, mit Ausnahme der Portal-Förderanlage. Dadurch lässt sich bei den Details der Umsetzung Zeit sparen und man kann sich stattdessen auf die SoA-basierte Infrastruktur konzentrieren. Ebenso ist vorteilhaft, dass die fraglichen Maschinen M1, M2, M3, M4, M5, M6 unter enger Überwachung standen und ihre Produktionsdaten, wie z.B. Bearbeitungszeiten und Energieverbrauch eingehend untersucht worden waren.

Durch den zunehmenden Trend, eher allgemein einsetzbare Produktionsmittel, wie etwa CNC-Maschinen, einzusetzen, ist vorausgesetzt, dass sich die Ergebnisse der Anwendung der hier beschriebenen Verfahren auf moderne Produktionsanlagen übertragen lassen.

Der in Fig. 5 dargestellte Aufbau der Fertigungszelle FZ zeigt deutlich, dass als Kriterium für die Auswahl von zu entwickelnden intelligenten Geräten nur solche Geräte in Betracht kommen, die ihre Funktionalität selbständig erfüllen können. Für den gegebenen Zellenaufbau heißt das, dass die Funktionalität von intelligenten Geräten in jeder CNC-Maschine M1, M2, M3, M4, M5, M6 und in der Portal-Förderanlage PFA umgesetzt wird.

Das Zuführ-Förderband könnte ebenfalls mit einer Web-Service-Funktionalität ausgerüstet werden, aber dies wird im vorliegenden Untersuchungs-Fall unterlassen, da dieses Band Schnittstellen zu anderen benachbarten Zellen der Fertigungslinie hat. Da das Konzept eine isolierte Betrachtung einer Zelle erfordert, liegt die Einbeziehung des weiterreichenden Fördersystems des Gesamtwerks außerhalb des Umfangs der vorliegenden Ausführungsform.

Für Test- und Simulationszwecke kann ein einfacher Web-Service eingesetzt werden, um das Portal-Fördersystem über die Ankunft neuer Werkstücke zu informieren.

Die Auswahl der erforderlichen Web-Services WS erfolgt in zwei Stufen: einem Top-Down-Verfahren und einem Bottom-Up-Verfahren.

Im Top-Down-Verfahren werden zuerst die für das Monitoring-System erforderlichen Funktionen festgelegt. Diese Funktionen, wie z.B. der Energieverbrauch wie in Gleichung (2) vorgestellt, werden in ihre einzelnen aufbauenden Kenngrößen zerlegt, so dass sie zu den Kenngrößen passen, die von den in den intelligenten Geräten verfügbaren Kenngrößen angeboten werden.

Das Bottom-Up-Verfahren wird dazu benutzt, um die mit Web-Service-Interfaces WSI ausgestatteten Modelle auszusuchen und um herauszufinden, wie sich diese zu sinnvollen Monitoring-Kenngrößen verknüpfen lassen. Bei diesem Verfahren wird überprüft, wie und ob sich die Sensor-Kenngrößen in Maschinen M1, M2, M3, M4, M5, M6 verknüpfen lassen und wie sich aus dieser Verknüpfung Monitoring-Kenngrößen für komplette Fertigungszellen FZ ergeben.

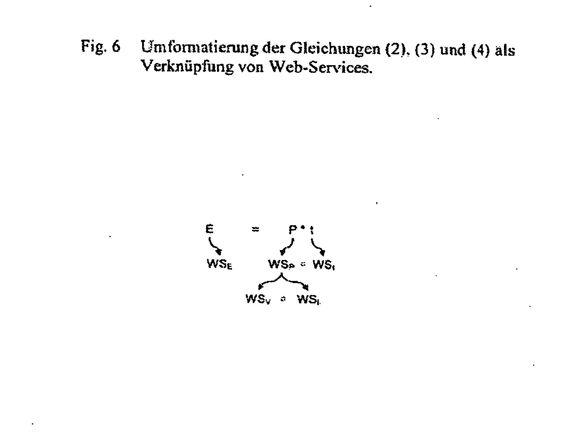

Die obige Beschreibung definiert Monitoring-Kenngrößen als äquivalent zu Web-Services. Zum Beispiel zeigen die oben dargelegten Gleichungen (2), (3) und (4), dass sich die beschriebenen Kenngrößen durch Web-Services WS ersetzen lassen. Dies ist in Fig. 6 gezeigt, wo die Verknüpfung der verschiedenen Merkmale identisch zur Verknüpfung der Web-Services ist.

Dies gilt für alle Arten von überwachten Merkmalen und kann deshalb wie folgt verallgemeinert werden:

$$F = F_1 \circ F_2 \circ F_3 \circ \ldots \circ F_i \circ \ldots \circ F_n \qquad (5)$$

$$\Leftrightarrow WS = WS_1 \circ WS_2 \circ WS_3 \circ \ldots \circ WS_i \circ \ldots \circ WS_n \qquad (6)$$

Durch Benutzung der beiden Verfahren ist es möglich, die notwendigen Komponenten des Monitoring-Systems auszusuchen und sie zu benutzen, um die in Gleichung (6) beschriebene notwendige Orchestrierung der Web-Services zu implementieren.

Das Ergebnis dieser Entwicklungen ist ein voll funktionsfähiges SoA-basiertes Monitoring-System.

Das Aufkommen des SoA-Paradigmas in der Fertigungsautomatisierung stellt eine bedeutende Hilfe für die Hersteller dar, die sich den heutigen industriellen Herausforderungen stellen müssen. Die Verfügbarkeit von SoA-basierten intelligenten Geräten mit zugehörigen oder sogar eingebauten Monitoring-Services gibt den Fertigungsingenieuren einen neuen Blick frei auf das Fertigungssystem. Dies eröffnet neue Wege zur Visualisierung der Entwicklung von Fertigungslinien, indem eine detailgenauere Visualisierung des Fertigungsstatus in Echtzeit zur Verfügung gestellt wird.

Die Benutzung der in diesem Dokument vorgestellten Verfahren ermöglicht es, ein komplettes Monitoring-System zu entwickeln, das in der Lage ist, den Status einer Fertigungszelle in einer sehr viel detaillierteren Weise zu verfolgen als mit den derzeit üblicherweise verfügbaren Monitoring-Systemen.

Obwohl sich die in diesem Dokument vorgestellten Energie-bezogenen Beispiele meistens auf elektrische Energie bezogen, lassen sich dieselben Prinzipien auch auf andere Formen des Energieverbrauchs anwenden. Dies gilt stets, solange sich die Energie-Kenngrößen, wie z.B. Medien-Druck und -Durchfluss, Temperatur, Pneumatik usw..., messen lassen.

Es könnte weiterhin argumentiert werden, dass das vorgeschlagene Verfahren durch die unerschwinglich hohen Kosten für die Ausstattung jedes Sensors und jeder kleinen Hardware-Komponente mit Web-Services ein Problem verursacht. Es ist jedoch nicht wahr, dass der Web-Service lokal auf der Ebene von z.B. jedem Hardware-Sensor implementiert werden muss, sondern er kann auch auf einem zentralen Web-Services-Hostrechner eingerichtet werden, der die Sensor-Signale zusammenfasst und die jeweiligen Web-Service-Interfaces anbietet. Dies wird möglich durch den vernetzten Aufbau der Web-Services. Da jedes Web-Services-Interface über das Netzwerk unabhängig gehostet würde, würde das ursprüngliche Konzept von autonomen intelligenten Sensoren als autonome Einheiten tatsächlich beibehalten.

Die Erfindung bezieht sich auf eine Verfahrensweise, Merkmal- und Modell-basierte Monitoring-Kenngrößen als Ergebnisse der Orchestrierung von Monitoring-Services in einem SoA-basierten industriellen Umfeld zur Verfügung zu stellen.

Die Erfindung ist durch eines oder mehrere der folgenden Merkmale gekennzeichnet:

Jeder Services-Orchestrator in der SoA-basierten Unternehmensarchitektur ist eine Monitor-Komponente innerhalb eines SoA-basierten übergeordneten Kontrollsystems, und/oder

die in einer intelligenten Hardware-Komponente (Gerät oder System, unabhängig von der Ebene der SoA-basierten Unternehmensarchitektur) eingebettete Software, die für die Verknüpfung der Modell-Parameter gemäß dem physikalischen/logischen Gesetz zuständig ist, wird als Orchestrator definiert, und/oder

das Ergebnis der Orchestrierung oder Verknüpfung wird als Service angeboten, und/oder

der Orchestrator ("Orchestration Engine" in Fig. 3 und Fig.4) stellt Monitoring-Kenngrößen zur Verfügung und wird aus diesem Grund als SoA-basierte Monitor-Komponente bezeichnet, und/oder

der Orchestrator kann Modell-basiertes Monitoring durchführen, wenn die Verknüpfung der Services (Monitoring-Kenngrößen) einem prozessgemäßen oder physikalischen oder mathematischen oder logischen Gesetz (Modell) folgt, und/oder

der Orchestrator kann auch Merkmal-basiertes Monitoring durchführen, wenn er nur auf der Grundlage von Ereignissen, die mit Merkmal-basierten Kenngrößen verbunden sind, z.B. mit als Services dargebotenen Sensor-Signalen, arbeitet, und/oder

der Orchestrator kann eine Kombination dieser beiden Monitoring-Verfahren durchrühren, und/oder

jedes Mal, wenn der Benutzer oder das übergeordnete SoA-basierte Kontrollsystem eine mit dem Prozess, mit dem Komponenten-Verhalten oder dem Verhalten der Architekturebene verbundene spezifische Monitoring-Kenngröße benötigt, bettet der Orchestrierungs-Monitor einen neuen Service ein, und/oder

das Verfahren der Services-Orchestrierung bzw. -Verknüpfung hinter dem Monitor-Orchestrator folgt einer der drei folgenden Alternativen:

(I) Antwort auf ein mathematisches oder physikalisches oder logisches Modell (z.B. Prozess-Gesetz, physikalisches Gesetz, usw...)

(II) Antwort auf eine Beziehung, die auf Erfahrung oder Kenntnis des zu überwachenden Prozesses beruht (z.B. qualitatives Modell), und

(III) Antwort auf eine Kombination von beidem,

und/oder

die Orchestrierungs-Monitore verwandeln die Monitoring-Kenngrößen in "Services". Diese Services laufen gemeinsam über den "Service-Bus" der SoA-basierten Unternehmensarchitektur. Die Eigenschaft der Monitoring-Services auf dem Service-Bus "gemeinsam" zu sein, ermöglicht es dem übergeordneten Kontrollsystem, Verknüpfungen von Services zu erzeugen, die auf unterschiedlichen Ebenen und von vielen unterschiedlichen Komponenten der SoA-basierten Unternehmensarchitektur angeboten werden

und/oder

auf die Energie bezogene Services, wie z.B. Energieverbrauch, Parameter der Energie-Effizienz, usw... die Energie-Monitoring-Kenngrößen sind und von intelligenten Geräten nicht als Services angeboten werden, können als Ergebnisse des Verfahrens mit Monitoring-Orchestrierung (gemäß den oben genannten Merkmalen) einfach erzeugt werden

Beispiel: die vom Raum verbrauchte elektrische Energie wird mit der pneumatischen Energie orchestriert, die das Ventil einer in diesem Raum arbeitenden Pumpe verbraucht.

**Tabelle zu Fig. 1 -** Design von Unternehmenarchitekturen:

| EBENE | ANWENDUNG | ZEITRAUMEN für<br>. Antwort<br>. Auflösung<br>. Zuverlässigkeit<br>. Instandsetzbarkeit |
|---|---|---|
| EBENE 5 | FERTIGUNGSPLANUNG<br>BUCHHALTUNG<br>LIEFERANTEN-EINSTUFUNG<br>COMPUTERGESTÜTZTER ENTWURF &<br>KONSTRUKTION<br>WARTUNGSKOSTEN-ERMITTLUNG | TAGE<br>bis zu<br>WOCHEN |
| EBENE 4 | FERTIGUNGS-ZEITPLANUNG<br>WARTUNGS-ZEIPLANUNG<br>PLANUNG DER PERTIGUNGSRESSOURCEN<br>NACHVERFOLGUNG MATERIAL/PRODUKTE<br>STANDORTWEITE PRODUKTIONSBERICHTSWESEN | STUNDEN<br>bis zu<br>TAGE |
| EBENE 3 | BEREICHSOPTIMIERUNG<br>PRODUKTIONSDATEN-HISTORIE<br>WARTUNGS-ÜBER WACHUNG | MINUTEN<br>bis zu<br>STUNDEN |
| EBENE 2 | BEDIENER-SCHNITTSTELLE<br>EINHEITEN-OPTIMIERUNG<br>TRENDERFASSUNG (RECORDER AUSWECHSELN) | SEKUNDEN<br>bis zu<br>MINUTEN |
| EBENE 1 | KONTROLLE<br>GEGENSEITIGE VERRIEGELUNG | MILLISEKUNDE<br>bis zu<br>SEKUNDEN |
| EBENE 0 | SENSOREN<br>AKTOREN | STÄNDIG |

Referenzliste zu Fig.1 : Design von Unternehmensarchitekturen

1    Typisches Unternehmens-System-Architektur
2    KOOPERATIVE ENGITECH
3    Kooperative DPMIS
4    FINAN. CONS.
5    EIS
6    PLANUNG
7    ENG
8    LOKAL ENG & TECH
9    MA. INT. MGT
10    ENG & CAC
11    LOKAL MIS

12    A/P
13    A/R
14    G/L
15    H/L
16    GEHÄLTER
17    AUFTRAGSERFASSUNG
18    VERSANDT
19    EINTRETEN
20    FERNNETZ
21    BÜRO-NETZ
22    INSTANDHALTUNGS-PLANUNG
23    SEITENWEITE - DATENBANK
24    MES
25    QUALITÄTSMANAGEMENT
26    ROHMATERIAL & FIG. O. ODS NACHVERFOLGUNG
27    PROD. PLANUNG U. AUSWERTUNG
28    SEITENWEITES INDUSTRIELLES LAN
29    LAD SYSTEM
30    VERARBEITUNGSBEREICHSÜBER WACHUNG
31    CUSTODY XFER SPEICHER
32    VERPACKUNG/HANDHABUNG
33    ENERGIE/HAUSÜBERWACHUNG
34    WARENAUS AUTOMATION
35    BETRIEBSANZEIGE
36    BETRIEBSANZEIGE
37    EIGENE DCS- UND FLC-NETZWERKE
38    CONTROLLER; PLCS; DATENERFASSUNGEGERÄTE, ETC.

## Patentansprüche

1. Verfahren zur Bereitstellung von Monitoring-Kenngrößen in einem SoA-basierten industriellen Umfeld zur Überwachung von Zustandsänderungen eines Prozesses und/oder von Produktionsmitteln (PM) einer industriellen Anlage, wobei die Zustandsänderungen durch Auswertung von merkmal-basierten Monitoring-Kenngrößen wie Sensor-Signalen erhalten werden, die von zu überwachenden Komponenten als Monitoring-Komponenten (K1, K2, K3, K4, K5) wie Sensoren der industriellen Anlage als Service (S1...Sn; WS1, WS2, WS3) bereitgestellt werden,
**dadurch gekennzeichnet,**
**dass** die von den Monitoring-Komponenten (K1, K2, K3, K4, K5) der industriellen Anlage als Services (S1...Sn; WS1, WS2, WS3) bereitgestellten merkmal-basierten Monitoring-Kenngrößen mittels Service-Orchestratoren (O, O1, 02), die in in unterschiedlichen Ebenen (SL, ML, EL) des SoA-basierten industriellen Umfelds verteilt angeordneten Monitoring-Komponenten (K1, K2, K3, K4, K5) und Kontrollsystemen (DB, HMI, IB, D1, D2) als Software-Baustein implementiert sind, zu neuen, von bestehenden Monitoring-Komponenten nicht zur Verfügung gestellten modell-basierten Monitoring-Kenngrößen (F1) orchestriert werden,
**dass** die Orchestrierung der Services (S1...Sn; WS1, WS2, WS3) gemäß einem oder mehreren physikalischen oder logischen Gesetz(en) eines Prozess-Modells der industriellen Anlage erfolgt,
**dass** jeder der Service-Orchestratoren (O, O1, 02) eine neue Monitoring-Komponente (D1, D2) in dem SoA-basierten industriellen Umfeld bildet und die zumindest eine neue modell-basierte Monitoring-Kenngrößen als Service (WSd1, WSd2) anbietet und
**dass** die von den Monitoring-Komponenten (K1, K2, K3, K4, K5, D1, D2) auf unterschiedlichen Ebenen des SoA-basierten industriellen Umfeldes als Services (WS1, WS2, WS3, WSd1, WSd2) angebotenen merkmal- und modell-basierten Monitoring-Kenngrößen über ein Service-orientiertes Netzwerk (SN) zur beliebigen Verknüpfung in einem einen Service-Orchestrator aufweisenden Kontrollsystem (D1, D2, IM; HMI; DB) bereitgestellt werden.

2. Verfahren nach Anspruch 1,
**dadurch gekennzeichnet,**
**dass** die Orchestrierung durch die vorzugsweise in einer oder mehreren der Komponenten eingebettete, den Service-Orchestrator (O, O1, 02) bildende Software ausgeführt wird und/oder dass die Orchestrierung von einem oder mehreren verteilten Orchestratoren (O, O1, O2) ausgeführt wird, d. h. von Teilen oder der gesamten Software, die in einer Komponente (D1, D2) oder in mehreren der Komponenten (D1, D2) der SoA-basierten Architektur eingebettet ist bzw. sind.

3. Verfahren nach Anspruch 1 oder 2,
**dadurch gekennzeichnet,**
**dass** für jedes physikalische oder logische Gesetz, das für das Monitoring eines bestimmten Prozesses benutzt wird, ein eigener Orchestrierungs-Prozess durchgeführt wird. und/oder dass das physikalische oder logische Gesetz aus einem Prozess-Modell abgeleitet wird oder auf dem Verfahren der qualitativen Service-Fusion beruht.

4. Verfahren nach zumindest einem der vorhergehenden Ansprüche,
**dadurch gekennzeichnet,**
**dass** die den Service-Orchestrator bildende und die Orchestrierung gemäß einem physikalischen oder logischen Gesetz für den zu überwachenden Prozess ausführende Software in die SoA-basierte Komponente (K1, K2, K3, K4, K5, D1, D2) hochladbar ist.

5. Verfahren nach zumindest einem der vorhergehenden Ansprüche,
**dadurch gekennzeichnet,**
**dass** das Prozess-Modell Modell-Parameter und Modell-Eigenschaften umfasst, wobei durch Auswertung der Modell-Eigenschaften die neuen Monitoring-Kenngrößen erzeugt werden, die sodann über die zu den prozessausführenden Komponenten gehörenden Web-Service-Interfaces zur Verfügung gestellt werden.

6. Verfahren nach zumindest einem der vorhergehenden Ansprüche,
**dadurch gekennzeichnet,**
**dass** der Service-Orchestrator (O, O1, 02) ein Modell-basiertes Monitoring durchführt, wenn die Verknüpfung der Services, d. h. der Monitoring-Kenngrößen, dem prozessgemäßen physikalischen oder mathematischen oder logischen Gesetz folgt.

7. Verfahren nach zumindest einem der vorhergehenden Ansprüche,
**dadurch gekennzeichnet,**
**dass** der Service-Orchestrator (O, 01, 02) ein Merkmal-basiertes Monitoring durchführt, wenn dieser auf der Grundlage von Ereignissen, die mit Merkamalbasierten Kenngrößen verbunden sind, arbeitet, d. h. mit den als Service dargebotenen Daten der Sensor-Signale.

8. Verfahren nach zumindest einem der vorhergehenden Ansprüche,
**dadurch gekennzeichnet,**
**dass** Merkmal-basierte Monitoring-Kenngrößen von intelligenten Sensoren (K1, K2, K3) als Services angeboten werden, wobei intelligente Sensoren solche sind, die mit einem Service-Interface (WSI1, WSI2, WSI3, WSI4, WSI5, WSI6) ausgerüstet sind, welches Sensor-Daten über das SoA-basierte Netzwerk anbietet.

9. Verfahren nach zumindest einem der vorhergehenden Ansprüche,
**dadurch gekennzeichnet,**
**dass** Modell-basierte Monitoring-Kenngrößen von den Orchestratoren (O, O1, 02) gemäß einem Orchestrierungs-Verfahren als Service angeboten werden.

10. Verfahren nach zumindest einem der vorhergehenden Ansprüche,
**dadurch gekennzeichnet,**
**dass** der Service-Orchestrator als Orchestrierungs-Monitor durch eine Signal-Verknüpfung, z. B. eine Sensor-Fusion, einen neuen, einzelne Services miteinander verknüpfenden Service erzeugt, oder durch das Prozess-Modell, das einen Service liefert, der Modell-Parameter oder funktionale Prozesse wie z. B. pneumatische Kraft miteinander verknüpft.

11. Verfahren nach zumindest einem der vorhergehenden Ansprüche,
**dadurch gekennzeichnet,**
**dass** die Service-Orchestrierung in dem Service-Orchestrator auf Basis einer der folgenden Ansätze erfolgt:

a) auf einem mathematischen oder physikalischen oder logischen quantitativen Modell,
b) auf der Kenntnis des zu überwachenden Prozesses in Form eines z. B. qualitativen Modells und/oder
c) auf einer Kombination von a) und b).

**12.** Verfahren nach zumindest einem der vorhergehenden Ansprüche,
**dadurch gekennzeichnet,**
**dass** die Services in Echtzeit angeboten werden.

**13.** System zur Bereitstellung von Monitoring-Kenngrößen in einem SoA-basierten industriellen Umfeld zur Überwachung von Zustandsänderungen eines Prozesses und/oder von Produktionsmitteln (PM) einer industriellen Anlage, wobei die Zustandsänderungen durch Auswertung von merkmal-basierten Monitoring-Kenngrößen wie Sensor-Signalen erhalten werden, die von zu überwachenden Komponenten als Monitoring-Komponenten (K1, K2, K3, K4, K5) wie Sensoren der industriellen Anlage als Service (S1...Sn; WS1, WS2, WS3, WSd1, WSd2) bereitgestellt werden,
**dadurch gekennzeichnet,**
**dass** die von den Monitoring-Komponenten (K1, K2, K3, K4, K5) der industriellen Anlage als Services (S1...Sn; WS1, WS2, WS3, WSd1, WSd2) bereitgestellten merkmal-basierten Monitoring-Kenngrößen mittels Service-Orchestratoren (O, O1, 02), die in in unterschiedlichen Ebenen (SL, ML, EL) des SoA-basierten industriellen Umfelds verteilt angeordneten Monitoring-Komponenten (K1, K2, K3, K4, K5) und Kontrollsystemen (DB, HMI, IB; D1, D2) als Software-Baustein implementiert sind, zu neuen, von bestehenden Monitoring-Komponenten nicht zur Verfügung gestellten Modell-basierten Monitoring-Kenngrößen (F1) orchestrierbar sind,
**dass** die Orchestrierung der Services (S1...Sn; WS1, WS2, WS3, WSd2, WSd2) gemäß einem oder mehreren physikalischen oder logischen Gesetz(en) eines Prozess-Modells der industriellen Anlage durchführbar ist,
**dass** jeder der Service-Orchestratoren (O, O1, 02) eine neue Monitor-Komponente (D1, D2) in dem SoA-basierten industriellen Umfeld bildet und die zumindest eine neue Modell-basierte Monitoring-Kenngrößen (WSd1, WSd2) als Service anbietet und
**dass** die von den Monitoring-Komponenten auf unterschiedlichen Ebenen des SoA-basierten industriellen Umfeldes als Services angebotenen Merkmal- und Modell-basierten Monitoring-Kenngrößen über ein Service-orientiertes Netzwerk (SN) zur beliebigen Verknüpfung in einem einen Service-Orchestrator (O, O1, 02) aufweisenden Kontrollsystem bereitstellbar sind.

**14.** System nach Anspruch 13,
**dadurch gekennzeichnet,**
**dass** die den Service-Orchestrator (O1, 02) bildende Software vorzugsweise in einer oder mehreren der Komponenten (K1, K2, K3, K4, K5, D1, D2, HMI, IB) eingebettet ist und/oder dass die den Service-Orchestrator (O, O1, 02) bildende und die Orchestrierung gemäß einem physikalischen oder logischen Gesetz für den zu überwachenden Prozess ausführende Software in die SoA-basierte Komponente hochladbar ist.

**15.** System nach zumindest einem der Ansprüche 13 bis 14,
**dadurch gekennzeichnet,**
**dass** Merkmal-basierte Monitoring-Kenngrößen von intelligenten Sensoren als Services angeboten werden, wobei intelligente Sensoren solche sind, die mit einem Service-Interface ausgerüstet sind, welches Sensor-Daten über das SoA-basierte Netzwerk anbietet.

**Claims**

**1.** A method for providing monitoring characteristics in an SoA-based industrial environment for monitoring changes in state of a process and/or of production means (PM) of an industrial plant, the changes in state being obtained by analyzing feature-based monitoring characteristics, such as sensor signals, which are provided as services (S1...Sn; WS1, WS2, WS3) by components to be monitored as monitoring components (K1, K2, K3, K4, K5), such as sensors of the industrial plant,
**characterized in that**
the feature-based monitoring characteristics provided as services (S1... Sn; WS1, WS2, WS3) by the monitoring components (K1, K2, K3, K4, K5) of the industrial plant are orchestrated by means of service orchestrators (O, O1, 02), which are implemented as software module in monitoring components (K1, K2, K3, K4, K5) and control systems (DB, HMI, IB, D1, D2) distributed at differing levels (SL, ML, EL) of the SoA-based industrial environment, to form new model-based monitoring characteristics (F1) which are not made available by existing monitoring components,
the orchestration of the services (S1...Sn; WS1, WS2, WS3) is carried out according to one or more physical or logical law(s) of a process model of the industrial plant,
each of the service orchestrators (O, O1, 02) forms a new monitoring component (D1, D2) in the SoA-based industrial environment and offers the at least one new model-based monitoring characteristic as a service (WSd1, WSd2), and

the feature- and model-based monitoring characteristics offered by the monitoring components (K1, K2, K3, K4, K5, D1, D2) as services (WS1, WS2, WS3, WSd1, WSd2) at differing levels of the SoA-based industrial environment are provided via a service-oriented network (SN) for random composition in a control system (D1, D2, IM; HMI; DB) comprising a service orchestrator.

2. The method according to claim 1,
   **characterized in that**
   the orchestration is carried out by the software which is preferably embedded in one or more of the components and forms the service orchestrator (O, O1, 02), and/or
   the orchestration is carried out by one or more distributed orchestrators (O, O1, 02), which is to say by parts of or by the entire software which are or is embedded in one component (D1, D2), or in several components (D1, D2), of the SoA-based architecture.

3. The method according to claim 1 or 2,
   **characterized in that**
   a dedicated orchestration process is carried out for each physical or logical law which is used for monitoring a certain process, and/or
   the physical or logical law is derived from a process model or is based on the method of qualitative service fusion.

4. A method according to at least one of the preceding claims,
   **characterized in that**
   the software which forms the sensor orchestrator and carries out the orchestration according to a physical or logical law for the process to be monitored can be uploaded to the SoA-based component (K1, K2, K3, K4, K5, D1, D2).

5. A method according to at least one of the preceding claims,
   **characterized in that**
   the process model comprises model parameters and model properties, wherein the new monitoring characteristics are generated by analyzing the model properties and these new monitoring characteristics are then made available via the web service interfaces that are part of the components carrying out the process.

6. A method according to at least one of the preceding claims,
   **characterized in that**
   the service orchestrator (O, O1, O2) carries out model-based monitoring if the composition of the services, which is to say of the monitoring characteristics, follows a procedural physical or mathematical or logical law.

7. A method according to at least one of the preceding claims,
   **characterized in that**
   the service orchestrator (O, O1, O2) carries out feature-based monitoring if it operates on the basis of events that are connected to feature-based characteristics, which is to say with the data from the sensor signals offered as services.

8. A method according to at least one of the preceding claims,
   **characterized in that**
   the feature-based monitoring characteristics of smart sensors (K1, K2, K3) are offered as services, wherein smart sensors are such which are equipped with a service interface (WSI1, WSI2, WSI3, WSI4, WSI5, WSI6), which offers sensor data via the SoA-based network.

9. A method according to at least one of the preceding claims,
   **characterized in that**
   model-based monitoring characteristics are offered by the orchestrators (O, O1, 02) as a service according to an orchestration method.

10. A method according to at least one of the preceding claims,
    **characterized in that**
    the service orchestrator as an orchestration monitor generates a new service which couples individual services with each other, using signal composition, for example sensor fusion, or using the process model that supplies a service which couples model parameters or functional processes, such as pneumatic power, with each other.

**11.** A method according to at least one of the preceding claims,
**characterized in that**
the service orchestration in the service orchestrator is carried out based on one of the following approaches:

   a) a mathematical or physical or logical quantitative model;
   b) the knowledge of the process to be monitored in the form of a qualitative model, for example; and/or
   c) a combination of a) and b).

**12.** A method according to at least one of the preceding claims,
**characterized in that**
the services are offered in real time.

**13.** A system for providing monitoring characteristics in an SoA-based industrial environment for monitoring changes in state of a process and/or of production means (PM) of an industrial plant, the changes in state being obtained by analyzing feature-based monitoring characteristics, such as sensor signals, which are provided as services (S1...Sn; WS1, WS2, WS3, WSd1, WSd2) by components to be monitored as monitoring components (K1, K2, K3, K4, K5), such as sensors of the industrial plant,
**characterized in that**
the feature-based monitoring characteristics provided as services (S1...Sn; WS1, WS2, WS3, WSd1, WSd2) by the monitoring components (K1, K2, K3, K4, K5) of the industrial plant can be orchestrated by means of service orchestrators (O, O1, O2), which are implemented as software module in monitoring components (K1, K2, K3, K4, K5) and control systems (DB, HMI, IB; D1, D2) distributed at differing levels (SL, ML, EL) of the SoA-based industrial environment, to form new model-based monitoring characteristics (F1) which are not made available by existing monitoring components,
the orchestration of the services (S1...Sn; WS1, WS2, WS3, WSd1, WSd2) can be carried out according to one or more physical or logical law(s) of a process model of the industrial plant,
each of the service orchestrators (O, O1, 02) forms a new monitor component (D1, D2) in the SoA-based industrial environment and offers the at least one new model-based monitoring characteristic (WSd1, WSd2) as a service, and
the feature- and model-based monitoring characteristics offered as services by the monitoring components at differing levels of the SoA-based industrial environment can be provided via a service-oriented network (SN) for random composition in a control system comprising a service orchestrator (O, O1, O2).

**14.** The system according to claim 13,
**characterized in that**
the software forming the service orchestrator (O1, O2) is preferably embedded in one or more of the components (K1, K2, K3, K4, K5, D1, D2, HMI, IB), and/or
the software which forms the sensor orchestrator (O, O1, 02) and carries out the orchestration according to a physical or logical law for the process to be monitored can be uploaded to the SoA-based component.

**15.** A system according to at least one of claims 13 to 14,
**characterized in that**
the feature-based monitoring characteristics of smart sensors are offered as services, wherein smart sensors are such which are equipped with a service interface, which offers sensor data via the SoA-based network.

**Revendications**

**1.** Procédé destiné à mettre à disposition des paramètres de surveillance dans un environnement industriel basé sur une AoS (architecture orientée services - SoA en anglais) afin de surveiller des changements d'état d'un processus et/ou de moyens de production (PM) d'une installation industrielle, sachant que les changements d'état sont obtenus par analyse de paramètres de surveillance basés sur des caractéristiques, tels que des signaux de capteur, qui sont mis à disposition en tant que services (S1...Sn ; WS1, WS2, WS3) par des composants à surveiller en tant que composants de surveillance (K1, K2, K3, K4, K5), tels que des capteurs de l'installation industrielle,
**caractérisé en ce**
**que** les paramètres de surveillance basés sur des caractéristiques mis à disposition en tant que services (S1...Sn ; WS1, WS2, WS3) par les composants de surveillance (K1, K2, K3, K4, K5) de l'installation industrielle, sont orchestrés en de nouveaux paramètres de surveillance basés sur des modèles (F1) non mis à disposition par des composants de surveillance existants, et ce au moyen d'orchestrateurs de services (O, O1, 02), qui sont implémentés en tant que modules logiciels dans des composants de surveillance (K1, K2, K3, K4, K5) et des systèmes de contrôle (DB, HMI, IB, D1, D2) répartis dans différents niveaux (SL, ML, EL) de l'environnement industriel basé sur une AoS,

**que** l'orchestration des services (S1...Sn ; WS1, WS2, WS3) s'effectue conformément à une ou plusieurs loi(s) physique(s) ou logique(s) d'un modèle de processus de l'installation industrielle,

**que** chacun des orchestrateurs de services (O, O1, 02) forme un nouveau composant de surveillance (D1, D2) dans l'environnement industriel basé sur une AoS et offre en tant que service (WSd1, WSd2) l'au moins un nouveau paramètre de surveillance basé sur des modèles, et

**que** les paramètres de surveillance basés sur des caractéristiques et des modèles offerts en tant que services (WS1, WS2, WS3, WSd1, WSd2) par les composants de surveillance (K1, K2, K3, K4, K5, D1, D2) sur différents niveaux de l'environnement industriel basé sur une AoS, sont mis à disposition par l'intermédiaire d'un réseau orienté services (SN) pour toute liaison dans un système de contrôle (D1, D2, IM ; HMI ; DB) présentant un orchestrateur de services.

2. Procédé selon la revendication 1,
   **caractérisé en ce**
   **que** l'orchestration est effectuée par le logiciel formant l'orchestrateur de services (O, 01, 02), de préférence incorporé dans un ou plusieurs des composants, et/ou que l'orchestration est effectuée par un ou plusieurs orchestrateur(s) (O, O1, 02) répartis, c'est-à-dire par des parties ou par la totalité du logiciel, qui est/sont incorporé(es) dans un composant (D1, D2) ou dans plusieurs des composants (D1, D2) de l'architecture orientée services.

3. Procédé selon la revendication 1 ou 2,
   **caractérisé en ce**
   **que** pour chaque loi physique ou logique qui est utilisée pour la surveillance d'un certain processus, est effectué un propre processus d'orchestration et/ou que la loi physique ou logique est déduite d'un modèle de processus ou repose sur le procédé de fusion qualitative de services.

4. Procédé selon au moins une des revendications précédentes,
   **caractérisé en ce**
   **que** le logiciel formant l'orchestrateur de services et effectuant l'orchestration selon une loi physique ou logique pour le processus à surveiller est chargeable dans les composants (K1, K2, K3, K4, K5, D1, D2) basés sur une AoS.

5. Procédé selon au moins une des revendications précédentes,
   **caractérisé en ce**
   **que** le modèle de processus comprend des paramètres modèles et des propriétés modèles, sachant que par analyse des propriétés modèles sont générés les nouveaux paramètres de surveillance, qui sont ensuite mis à disposition par l'intermédiaire des interfaces de services web appartenant aux composants exécutant le processus.

6. Procédé selon au moins une des revendications précédentes,
   **caractérisé en ce**
   **que** l'orchestrateur de services (O, O1, 02) effectue une surveillance basée sur des modèles quand la liaison des services, c'est-à-dire des paramètres de surveillance, suit la loi physique ou mathématique ou logique conforme au processus.

7. Procédé selon au moins une des revendications précédentes,
   **caractérisé en ce**
   **que** l'orchestrateur de services (O, O1, 02) effectue une surveillance basée sur des caractéristiques quand il travaille sur la base d'événements en liaison avec des paramètres basés sur des caractéristiques, c'est-à-dire avec les données des signaux de capteur offertes en tant que services.

8. Procédé selon au moins une des revendications précédentes,
   **caractérisé en ce**
   **que** des paramètres de surveillance basés sur des caractéristiques sont offerts en tant que services par des capteurs intelligents (K1, K2, K3), sachant que les capteurs intelligents sont ceux qui sont équipés d'une interface de services (WSI1, WSI2, WSI3, WSI4, WSI5, WSI6), laquelle offre des données de capteur par l'intermédiaire du réseau basé sur une AoS.

9. Procédé selon au moins une des revendications précédentes,
   **caractérisé en ce**

**que** des paramètres de surveillance basés sur des modèles sont offerts en tant que services par les orchestrateurs (O, O1, 02) conformément à un procédé d'orchestration.

10. Procédé selon au moins une des revendications précédentes,
**caractérisé en ce**
**que** l'orchestrateur de services en tant que moniteur d'orchestration génère par une liaison de signaux, p. ex. une fusion de capteurs, un nouveau service reliant entre eux des services individuels, ou par le modèle de processus qui livre un service qui relie entre eux des paramètres modèles ou des processus fonctionnels tels qu'une force pneumatique.

11. Procédé selon au moins une des revendications précédentes,
**caractérisé en ce**
**que** l'orchestration de services est effectuée dans l'orchestrateur de services en se basant sur l'une des approches suivantes :

a) sur un modèle quantitatif mathématique ou physique ou logique,
b) sur la connaissance du processus à surveiller sous la forme p. ex. d'un modèle qualitatif et/ou
c) sur une combinaison de a) et b).

12. Procédé selon au moins une des revendications précédentes,
**caractérisé en ce**
**que** les services sont offerts en temps réel.

13. Système destiné à mettre à disposition des paramètres de surveillance dans un environnement industriel basé sur une AoS afin de surveiller des changements d'état d'un processus et/ou de moyens de production (PM) d'une installation industrielle, sachant que les changements d'état sont obtenus par analyse de paramètres de surveillance basés sur des caractéristiques, tels que des signaux de capteur, qui sont mis à disposition en tant que services (S1...Sn ; WS1, WS2, WS3, WSd1, WSd2) par des composants à surveiller en tant que composants de surveillance (K1, K2, K3, K4, K5), tels que des capteurs de l'installation industrielle,
**caractérisé en ce**
**que** les paramètres de surveillance basés sur des caractéristiques mis à disposition en tant que services (S1...Sn ; WS1, WS2, WS3, WSd1, WSd2) par les composants de surveillance (K1, K2, K3, K4, K5) de l'installation industrielle, peuvent être orchestrés en de nouveaux paramètres de surveillance basés sur des modèles (F1) non mis à disposition par des composants de surveillance existants, et ce au moyen d'orchestrateurs de services (O, O1, 02), qui sont implémentés en tant que modules logiciels dans des composants de surveillance (K1, K2, K3, K4, K5) et des systèmes de contrôle (DB, HMI, IB ; D1, D2) répartis dans différents niveaux (SL, ML, EL) de l'environnement industriel basé sur une AoS,
**que** l'orchestration des services (S1...Sn ; WS1, WS2, WS3,WSd1, WSd2) peut être effectuée conformément à une ou plusieurs loi(s) physique(s) ou logique(s) d'un modèle de processus de l'installation industrielle,
**que** chacun des orchestrateurs de services (O, O1, 02) forme un nouveau composant de surveillance (D1, D2) dans l'environnement industriel basé sur une AoS et offre en tant que service (WSd1, WSd2) l'au moins un nouveau paramètre de surveillance basé sur des modèles, et
**que** les paramètres de surveillance basés sur des caractéristiques et des modèles offerts en tant que services par les composants de surveillance sur différents niveaux de l'environnement industriel basé sur une AoS, peuvent être mis à disposition par l'intermédiaire d'un réseau orienté services (SN) pour toute liaison dans un système de contrôle présentant un orchestrateur de services (O, O1, 02).

14. Système selon la revendication 13,
**caractérisé en ce**
**que** le logiciel formant l'orchestrateur de services (O1, 02) est de préférence incorporé dans un ou plusieurs des composants (K1, K2, K3, K4, K5, D1, D2, HMI, IB) et/ou que le logiciel formant l'orchestrateur de services (O, O1, 02) et effectuant l'orchestration selon une loi physique ou logique pour le processus à surveiller est chargeable dans les composants basés sur une AoS.

15. Système selon au moins une des revendications 13 ou 14,
**caractérisé en ce**
**que** des paramètres de surveillance basés sur des caractéristiques sont offerts en tant que services par des capteurs intelligents, sachant que les capteurs intelligents sont ceux qui sont équipés d'une interface de services, laquelle offre des données de capteur par l'intermédiaire du réseau basé sur une AoS.

TYPICAL ENTERPRISE SYSTEMS ARCHITECTURE 1

LOCAL ENG & TECH 8
MAINT. MGT 9
ENG. & CAC 10

LOCAL MIS 11
A/P 12
A/R 13
G/L 14
SAL-ARIES 15
H/L

ORDER ENTRY 17
SHIP-PING 18
R OCCUR 19

COOPERATE ENG/TECH 2
ENG 7
COOPERATE DPMIS 3
FINAN CONS. 5
EIS
PLAN-ING 6
4
WIDE AREA NETWORK 20

OFFICE LAN 21
SITEWIDE INDUSTRIAL LAN 28

MAINTENCE SCHEDULING 22
SITEWIDE DATABASE 23
MES 24
QUALITY MANAG'T 25
RAWMATE & FIGOODS TRACKING 26
PROD'N SCHEDUL'G & REPORT'G 27

LAD SYSTEMS 29
PROCESS AREA SUPERV. 30
CUSTODY XFER STORAGE 31
PACKAGING HANDLING 32
POWER HOUSE SUPERV. 33
WAREHOUSE AUTOMATION 34

OPER DISP. 35
OPER DISP. 36
PROPRIETARY DSC AND FLC NETWORKS 37
CONTROLLER, PLC'S, DATA ACQUISATION DEVICES, ETC. 38

Fig. 1

## Referenzliste zu Fig.1: Design von Unternehmensarchitekturen

| | |
|---|---|
| 1 | Typisches Unternehmens-System-Architektur |
| 2 | KOOPERATIVE ENGITECH |
| 3 | Kooperative DPMIS |
| 4 | FINAN. CONS. |
| 5 | EIS |
| 6 | PLANUNG |
| 7 | ENG |
| 8 | LOKAL ENG & TECH |
| 9 | MA. INT. MGT |
| 10 | ENG & CAC |
| 11 | LOKAL MIS |
| 12 | A/P |
| 13 | A/R |
| 14 | G/L |
| 15 | H/L |
| 16 | GEHÄLTER |
| 17 | AUFTRAGSERFASSUNG |
| 18 | VERSANDT |
| 19 | EINTRETEN |
| 20 | FERNNETZ |
| 21 | BÜRO-NETZ |
| 22 | INSTANDHALTUNGS-PLANUNG |
| 23 | SEITENWEITE – DATENBANK |
| 24 | MES |
| 25 | QUALITÄTSMANAGEMENT |
| 26 | ROHMATERIAL & FIG. O. ODS NACHVERFOLGUNG |
| 27 | PROD. PLANUNG U. AUSWERTUNG |
| 28 | SEITENWEITES INDUSTRIELLES LAN |
| 29 | LAD SYSTEM |
| 30 | VERARBEITUNGSBEREICHSÜBERWACHUNG |
| 31 | CUSTODY XFER SPEICHER |
| 32 | VERPACKUNG/HANDHABUNG |
| 33 | ENERGIE/HAUSÜBERWACHUNG |
| 34 | WARENAUS AUTOMATION |
| 35 | BETRIEBSANZEIGE |
| 36 | BETRIEBSANZEIGE |
| 37 | EIGENE DCS- UND FLC-NETZWERKE |
| 38 | CONTROLLER; PLCS; DATENERFASSUNGEGERÄTE, ETC. |

Tabelle zu Fig. 1 - Design von Unternehmensarchitekturen:

| EBENE | ANWENDUNG | ZEITRAHMEN für<br>. Antwort<br>. Auflösung<br>. Zuverlässigkeit<br>. Instandsetzbarkeit |
|---|---|---|
| EBENE 5 | FERTIGUNGSPLANUNG<br>BUCHHALTUNG<br>LIEFERANTEN-EINSTUFUNG<br>COMPUTERGESTÜTZTER ENTWURF &<br>KONSTRUKTION<br>WARTUNGSKOSTEN-ERMITTLUNG | TAGE<br>bis zu<br>WOCHEN |
| EBENE 4 | FERTIGUNGS-ZEITPLANUNG<br>WARTUNGS-ZEITPLANUNG<br>PLANUNG DER FERTIGUNGSRESSOURCEN<br>NACHVERFOLGUNG MATERIAL/PRODUKTE<br>STANDORTWEITE PRODUKTIONSBERICHTSWESEN | STUNDEN<br>bis zu<br>TAGE |
| EBENE 3 | BEREICHSOPTIMIERUNG<br>PRODUKTIONSDATEN-HISTORIE<br>WARTUNGS-ÜBERWACHUNG | MINUTEN<br>bis zu<br>STUNDEN |
| EBENE 2 | BEDIENER-SCHNITTSTELLE<br>EINHEITEN-OPTIMIERUNG<br>TRENDERFASSUNG (RECORDER AUSWECHSELN) | SEKUNDEN<br>bis zu<br>MINUTEN |
| EBENE 1 | KONTROLLE<br>GEGENSEITIGE VERRIEGELUNG | MILLISEKUNDEN<br>bis zu<br>SEKUNDEN |
| EBENE 0 | SENSOREN<br>AKTOREN | STÄNDIG |

**Fig. 2**

PM

WS1: Electrical_Voltage
WS2: Electrical Intensity
WS3: Time
WS4: Electrical_Energy

Sensor ⇒ Signal → XML Data ⇒  ~ K1
Web Service

⇓ WS11
Smart Sensor 1    WS1

Sensor ⇒ Signal → XML Data ⇒  ~ K2
Web Service

⇓ WS12
Metering System 1    WS2

Sensor ⇒ Signal → XML Data ⇒  ~ R3
Web Service

⇓ WS13
Smart Sensor 2    WS3

WS4

WS1 ^ WS2 ^ WS3

Service Bus    SN

Service Framework
coordination of services and composition

Orchestration Engine
give support for decisions and optimization of processes

Decision Support System

Electrical_Energy = Electrical_Voltage x Electrical_Intensity x Time
WS4 = WS1 x WS2 x WS3

1) The WS4 is generated and exposed by the Orchestrator, which works following the Electrical Law related to Energy/Power/Voltage/Intensity/Time.

2) There are not Devices with metering capabilities but an Orchestrator able to generate a new service by composing/orchestrating services exposed as Features derived from a physical/logic model (in this case, the Ohm-law extended)

**Fig. 3 α**

23

Übersetzung zu Fig. 3 a

| Sensor → Signal → XML Daten | | | WS1: Elektrische Spannung |
| | Web-Service | | WS2: Elektrische Stromstärke |
| | | | WS3: Zeit |
| Intelligenter Sensor 1 | WS1 | | WS4: Elektrische Energie |

| Sensor → Signal → XML Daten | | WS4 | Services-Rahmen |
| | Web-Service | | Koordinierung und |
| | | WS2 | Verknüpfung der Services |
| Messsystem 1 | | | |

Orchestration-Engine
Hilfe für Entscheidungsfindung
und Prozess-Optimierung

| Sensor → Signal → XML Daten | | | |
| | Web-Service | | |

| Intelligenter Sensor 2 | WS3 | Service-Bus | Entscheidungshilfe-System |

Elektrische Energie = Elektrische Spannung x Elektrische Stromstärke x Zeit
WS4 = WS1 x WS2 x WS3

1) Der Orchestrator erzeugt und bietet WS4 nach dem elektrischen Gesetz für Energie/Leistung/Spannung/Stromstärke/Zeit an

2) Es gibt Geräte die keine Messfähigkeit haben, aber der Orchestrator kann einen neuen Service durch Verknüpfen/Orchestrieren von Services erzeugen, die als Merkmale aus dem physikalisch/logischen Modell abgeleitet wurden (in diesem Fall dem erweiterten Ohm'schen Gesetz).

Service Consumers

ES

Database

HMI

IB

HMI

Information Board

SN

Service Network

WSerp

WS1

ERP

WSmotor

WS4

Motor

WSsensor1

WS1

Smart Sensor 1

WSsensor2

WS2

Smart Sensor 2

KS

K4

K1

K2

Enterprise Level

Machine Level

Sensor / Actuator Level

Fig. 3b

Fig. 4 α

26

Übersetzung zu Fig. 4 α

**SoA-basierte Unternehmensarchitektur**
Geschäftsebene
Maschinenebene
Sensor/Aktor-Ebene

Sensor → Signal → XML Daten
                     Web-Service

Intelligenter Sensor 1        WS1

verschiedenen

können.

Sensor → Signal → XML Daten         WS6
                     Web-Service
                               WS2
Messsystem 1

Sensor → Signal → XML Daten
                     Web-Service

Intelligenter Sensor 2        WS3   Service-Bus

**Monitor**
**Orchestration-Engine**

WS1: Elektrische Spannung
WS2: Elektrische Stromstärke
WS3: Zeit
WS4: Pneuamtische4r Druck
WS5: Raumtemperatur

Hinwels: es kann mehrere solcher Monitore geben, die auf

Ebenen eingebaut und in verschiedene Hardwares eingebettet sein

**Services-Rahmen**
   *Koordinierung und*
   *Verknüpfung der Services*

**Orchestration-Engine**
   *Hilfe für Entscheidungsfindung*
   *und Prozess-Optimierung*

**Entscheidungshilfe-System**

Hinwois: ^ bedeutet Orchestrierung/Verknüpfung

EP 2 567 297 B1

Service Consumers

Model-Based Orchestration
Service Processors

Database
D3

HMI
HMI

Information
Board
I8

Device 1
Orchestration
Engine
O4

Device 2
Orchestration
Engine
O2

Service
Network
N5

WSe ^ WSs1
WSd1
WSe ^ WSsm ^ WSs2
WSd2

WSe
WSm
WSs1
WSs2

ERP
K5
Motor
K4
Smart
Sensor 1
K1
Smart
Sensor 2
K2
P4

Enterprise
Level
E3
Machine
Level
A4
Sensor /
Actuator Level
S5

Fig. 4b

28

Aufbau einer Fertigungszelle für den Test, bestehend aus einer Portal-Förderanlage ( ▨ ), sechs CNC-Maschinen ( ▧ ) und einem Zuführ-Förderband (in grau) für den Zu- und Abtransport der Teile zur Zelle. Die Förderanlage und die CNC-Maschinen sind mit Web-Services ausgestattet, die in der Fig. symbolisch ( ▨ ) dargestellt sind.

**Fig. 5**

Fig. 6   Umformatierung der Gleichungen (2), (3) und (4) als
Verknüpfung von Web-Services.

$$E \quad = \quad P \cdot i$$

$$WS_E \qquad WS_P \circ WS_i$$

$$WS_V \circ WS_I$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007098168 A1
- WO 2008135459 A2
- EP 2172879 A1

**In der Beschreibung aufgeführte Nicht-Patentliteratur**

- **D. CACHAPA.** SoA-based Production Monitoring Systems for Energy Efficiency: A Case-study Using Ford's POSMon System. *ICIT Conference,* 14. Marz 2010
- **AUFSATZ J. KING U.A.** *Atlas: Service-oriented sensor platform,* 2006
- **F. JAMMES ; H. SMIT.** Service-oriented architectures for devices - the SIRENA view. *3rd IEEE International Conference on Industrial Informatics (IND-IN),* 2005, 140-147
- Service-oriented device communications using the devices profile for web services. **F. JAMMES ; A. MENSCH ; H. SMIT.** Proceedings of the 3rd international workshop on Middleware for pervasive and ad-hoc computing. ACM, 2005, 1-8
- **D. CACHAPA ; A. COLOMBO ; M. FEIKE ; A. BEP-PERLING.** An Approach for Integrating Real and Virtual Production Automation Devices Applying the Service-oriented Architecture Paradigm. *IEEE Conference on Emerging Technologies & Factory Automation,* 2007, 309-314